(19) **Europäisches Patentamt**
**European Patent Office**
**Office européen des brevets**

(11) **EP 3 838 950 A1**

(12) **EUROPÄISCHE PATENTANMELDUNG**

(43) Veröffentlichungstag:
**23.06.2021   Patentblatt 2021/25**

(51) Int Cl.:
***C08G 18/10*** *(2006.01)*   ***C08G 18/32*** *(2006.01)*
***C08G 18/73*** *(2006.01)*

(21) Anmeldenummer: **19216807.8**

(22) Anmeldetag: **17.12.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **THERMOPLASTISCHES ALIPHATISCHES POLYURETHANPREPOLYMER MIT NIEDRIGER SCHMELZENTHALPIE**

(57)   Die vorliegende Erfindung betrifft thermoplastische aliphatische Polyurethanprepolymere bei denen das Verhältnis $\overline{M_z}/\overline{M_w}$ in einem Bereich von 2,3 bis 6 liegt und das Verhältnis $\overline{M_w}/\overline{M_n}$ in einem Bereich von 4 bis 10 liegt sowie ein Verfahren und eine Vorrichtung zu deren Herstellung.

EP 3 838 950 A1

**Beschreibung**

Die vorliegende Erfindung betrifft thermoplastische aliphatische Polyurethanprepolymere bei denen das Verhältnis $\overline{M_z}/\overline{M_w}$ in einem Bereich von 2,3 bis 6 liegt und das Verhältnis $\overline{M_w}/\overline{M_n}$ in einem Bereich von 4 bis 10 liegt sowie ein Verfahren und eine Vorrichtung zu deren Herstellung.

Polyurethanprepolymere sind wichtige Komponenten in der Polyurethanchemie. Als Hydroxyterminierte Prepolymere werden sie als OH-Komponente kombiniert mit Polyisocyanaten beispielsweise in Zwei-Komponenten Lack- oder Klebstoffsystemen verwendet. Typische Anwendungsgebiete sind Klebstoffe für die Verpackungsindustrie oder auch Systeme zur Beschichtung von Leder oder Textilien (Kunststoff Handbuch Band 7, Polyurethane, G. Oertel, Hanser Verlag, S. 99ff).

Thermoplastische aliphatische Polyurethanprepolymere, die aus kurzkettigen aliphatischen Diolen und aliphatischen Polyisocyanaten aufgebaut sind, weisen wertvolle Eigenschaften auf. Als Hartsegment-Bausteine eignen sie sich hervorragend zur Modifikation diverser Produkte und Werkstoffe. Thermoplastische Polyurethanprepolymere die eine niedrigere Schmelzenthaphie aufweisen im Vergleich zu vergleichbaren thermoplastischen Polyurethanprepolymeren mit gleichem Schmelzpunkt sind besonders begehrt, da die Energie, die zum Aufschmelzen des thermoplastischen Polyurethanprepolymers benötigt wird, deutlich niedriger ist und damit weniger Energie und Zeit zum Aufschmelzen aufgebracht werden muss. Eine niedrigere Schmelzenthalpie führt auch zu einem vorteilhafteren Viskositätsverlauf und damit effizienterer Förderung beispielsweise im Extruder. Desweitern erlaubt die Schmelzenthalpie auch eine direkt Vergleichbarkeit des kristallinen Zustandes. Beispielsweise beim Spritzguss ist eine niedrige Kristallinität von Vorteil, da der Kristallisationsschrumpf geringer ist, was zu einer erhöhten Formstabilität auch bei erhöhten Temperaturen führt.

Problematisch bei der Herstellung von thermoplastischen aliphatischen Polyurethanprepolymeren ist, dass aufgrund der hohe Dichte an reaktiven Gruppen, die Polyaddition von kurzkettigen aliphatischen Diolen mit aliphatischen Polyisocyanaten eine hohe Wärmetönung bzw. Reaktionsenthalpie aufweist, was bei unzureichender Wärmeabfuhr zur Beschädigung, bspw. durch eine Verfärbung, bis hin zur Rückbildung von Monomeren und zur Zerstörung (Veraschung) des Polyurethanprepolymers führt.

In der industriellen Praxis werden kontinuierliche Herstellungsverfahren bevorzugt, da sich hier Maßstabsvergrößerungen einfacher durchführen lassen und größere Mengen mit konstanter Qualität produziert werden können. Die Verwendung von Lösungsmitteln ist ebenfalls nachteilig, da im Produkt verbleibende Restlösungsmittel in die Umwelt freigesetzt werden können und unerwünschte Eigenschaften wie beispielsweise Geruch, Toxizität und/oder eine Verschlechterung der mechanischen Eigenschaften verursachen können. Die vollständige Entfernung von Restlösungsmitteln aus einem Polymer ist grundsätzlich mit einem erhöhten technischen Aufwand und Energieverbrauch verbunden.

EP 1 757 632 B1 offenbart thermoplastische Polyurethanprepolymere sowie ein Verfahren zu dessen Herstellung. Die thermoplastischen Prepolymere werden dabei durch die Umsetzung von einem oder mehreren linearen Hydroxy-terminierten Polyolen, d.h. Polyetherdiole, Polyesterdiole etc, mit einem mittleren Molekulargewicht von 500 bis 5000 mit einem organischen Diisocyanat erhalten. Die Umsetzung findet in einem Mischaggregat mit hoher Scherenergie statt.

DE 10 2011 085 944 A1 beschreibt ein Verfahren zur Herstellung von thermoplastischem Polyurethan mit niedrigem Schmelzpunkt in einem Kreislaufreaktor. Die für das Verfahren benötigten hohen Reaktionstemperaturen fördern die Bildung von Allophanaten und erschweren die Abfuhr der Reaktionswärme von Umsetzungen mit hoher Wärmetönung bzw. machen eine Wärmeabfuhr unmöglich.

Ein Verfahren zur Herstellung von Polyurethan ist beispielsweise aus der WO01/14441 bekannt. Offenbart wird ein Verfahren zur Herstellung von NCO-, NH- oder OH-terminierten Polyurethanen in einem Statikmischer. Wesentlich für dieses Verfahren ist, dass die Temperatur bei der Umsetzung der Komponenten adiabat geführt wird und/oder der Statikmischer begleitbeheizt ist und damit nur für Verfahren geeignet ist, die endotherm sind oder nur eine geringe Exothermie aufweisen. Für die Umsetzung von Komponenten, die eine hohe Reaktionsenthalphie aufweisen, d.h. deren Umsetzung miteinander stark exotherm verläuft, ist das Verfahren nicht geeignet.

EP0519734 offenbart ein Urethanisierungsreaktionsverfahren, wobei ein Polyolgemisch, enthaltend mindestens ein langkettiges Polyol mit einer maximalen Hydroxylzahl von 10 mg/g KOH, mit einer Polyisocyanat-Komponente zu einem Urethan-modifizierten Harz umgesetzt wird. Die Reaktionsmischung wird in einem Statikmischer bei Temperaturen von 90 °C - 200 °C umgesetzt. Aufgrund der geringen Dichte an funktionellen Gruppen, ist auch hier ein Energieeintrag nötig.

Nachteilig bei den oben beschriebenen Verfahren ist, dass diese sich eher für Reaktionen eignen, die entweder endotherm verlaufen oder nur eine geringe Wärmetönung aufweisen und daher einen konstanten Wärmeeintrag erfordern oder adiabat gefahren werden müssen. Bei Systemen, die eine hohe Exothermie der Reaktion aufweisen ($\leq$ -350 kJ/kg), ist der adiabatische Temperaturanstieg problematisch. Ausgehend von Monomeren bei einer Temperatur ausreichend für ein unkatalysiertes Anspringen der Reaktion (> 50 °C), würde bei adiabatischer Fahrweise die Temperatur der Reaktionsprodukte auf deutlich über 300 °C ansteigen. Die Herstellung und Verarbeitung von Polyurethanen bei Temperaturen von > 200 °C über einen längeren Zeitraum ist aufgrund der Vielzahl von thermischen Nebenreaktionen problematisch. Eine Temperatur von 300 °C liegt darüber hinaus oberhalb der Ceiling Temperatur der Polyurethanbindung. Die Ceiling Temperatur ist als die Temperatur definiert, bei der die Depolymerisation im Gleichgewicht mit der Polymerisation steht.

Es ist Aufgabe der vorliegenden Erfindung ein thermoplastisches aliphatisches Polyurethanprepolymer bereitzustellen sowie ein Verfahren und eine Vorrichtung zu dessen Herstellung, wobei das erfindungsgemäße thermoplastische Polyurethanprepolymer eine im Vergleich zu mit herkömmlichen Herstellungsmethoden hergestellten vergleichbaren thermoplastischen Polyurethanprepolymeren eine niedrigere Schmelzenthalpie aufweisen soll.

Diese Aufgabe wurde gelöst durch ein thermoplastisches aliphatisches Polyurethanprepolymer, dadurch gekennzeichnet, dass das Verhältnis $\overline{M}_z$ / $\overline{M}_w$ des thermoplastischen aliphatischen Polyurethanprepolymers in einem Bereich von 2,3 bis 6 liegt und das Verhältnis $\overline{M}_w/\overline{M}_n$ des thermoplastischen aliphatischen Polyurethanprepolymers in einem Bereich von 4 bis 10 liegt, wobei $\overline{M}_z$ das Zentrifugenmittel der Molmasse, $\overline{M}_n$ das Zahlenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

Es wurde überraschend gefunden, dass die erfindungsgemäßen thermoplastischen aliphatischen Polyurethanprepolymere eine deutlich geringere Schmelzenthalpie aufweisen im Vergleich zu vergleichbaren thermoplastischen Polyurethanpropolymeren mit gleichem Schmelzpunkt, welche mit einem herkömmlichen Batch-Verfahren hergestellt wurden. Dies führt dazu, dass die Energie die zum Aufschmelzen der erfindungsgemäßen thermoplastischen aliphatischen Prepolymere benötigt wird, deutlich geringer ist, als bei vergleichbaren thermoplastischen Polyurethanprepolymeren. Des Weiteren führt die niedrige Schmelzenthapie auch zu einem vorteilhafteren Viskositätsverlauf und damit effizienterer Förderung beispielsweise im Extruder. Aufgrund der direkten Vergleichbarkeit der Schmelzenthalpie mit dem kristallinen Zustand weisen die erfindungsgemäßen thermoplastischen aliphatischen Polyurethanpropolymere eine deutlich verringerte Anfälligkeit für Kristallisationsschrumpf auf, was beispielsweise beim Spritzguss oder weiteren Verarbeitungsschritten von Vorteil ist und zu einer erhöhten Formstabilität auch bei erhöhten Temperaturen führt.

Falls nicht explizit anders angegeben beziehen sich alle Prozentangaben auf das Gewicht (Gew.-%). Die Angabe Gew.-% bezieht sich dabei auf das Gesamtgewicht des jeweiligen Systems oder das Gesamtgewicht der jeweiligen Komponente. Zum Beispiel kann ein Copolymer ein bestimmtes Monomer in Gew.-% angegeben enthalten, in diesem Fall würden sich die Gewichtsprozente auf das Gesamtgewicht des Copolymers beziehen.

Das Wort "ein" im Zusammenhang mit zählbaren Größen ist im Rahmen der vorliegenden Erfindung nur dann als Zahlwort zu verstehen, wenn dies ausdrücklich gesagt wird (z. B. durch den Ausdruck "genau ein"). Wenn im Folgenden beispielsweise von "einem Polyol" gesprochen wird, ist das Wort "ein" lediglich als unbestimmter Artikel und nicht als Zahlwort aufzufassen, es ist also damit auch eine Ausführungsform umfasst, die ein Gemisch aus mindestens zwei Polyolen enthält.

Unter "aliphatisch" oder "aliphatischer Rest" werden im Sinne der Erfindung azyklische gesättigte Kohlenwasserstoffreste verstanden, die verzweigt oder linear sowie unsubstituiert sind. Diese aliphatischen Kohlenwasserstoffreste enthalten vorzugsweise 2, 3, 4, 5 oder 6 Kohlenstoffatome.

Bevorzugt bedeuten erfindungsgemäß die Ausdrücke "umfassend" oder "enthaltend", "im Wesentlichen bestehend aus" und besonders bevorzugt "bestehend aus".

Falls nicht explizit anders angegeben, werden in der vorliegende Erfindung das Zentrifugenmittel der Molmasse $\overline{M}_z$, das Massenmittel der Molmasse $\overline{M}_w$ und das Zahlenmittel der Molmasse $\overline{M}_n$ mittels Gelpermeationschromatographie (GPC) unter Verwendung von Polymethylmethacrylat als Standard bestimmt. Die zu vermessende Probe wird in einer Lösung von 3 g Kaliumtrifluoracetat in 400 Kubikzentimeter Hexafluorisopropanol aufgelöst (Probenkonzentration ca. 2 mg/Kubikzentimeter), dann mit einer Flussrate von 1 Kubikzentimeter/Minute über eine Vorsäule gegeben und anschließend über drei in Reihe geschaltete Chromatographiesäulen getrennt, zuerst über eine 1000 Å PSS PFG 7 μm Chromatographiesäule, dann über eine 300 Å PSS PFG 7 μm Chromatographiesäule und zuletzt über eine 100 Å PSS PFG 7 μm Chromatographiesäule. Als Detektor wurde ein Brechungsindex-Detektor (RI-Detektor) verwendet.

Das Zentrifugenmittel der Molmasse ($\overline{M}_z$) wurde aus den durch die Messung der Gelpermeationschromatographie erhaltenen Daten mit Hilfe der folgenden Gleichung errechnet:

$$\overline{M}_z = \frac{\sum_i n_i M_i^3}{\sum_i n_i M_i^2} \ \text{ in g/mol}$$

wobei:

$M_i$ die molare Masse der Polymere der Fraktion $i$ ist, so dass $M_i < M_{i+1}$ für alle i, in g/mol ist,

$n_i$ die Stoffmenge des Polymers der Fraktion *i*, in mol ist.

Das Massenmittel der Molmasse ($\overline{M}_w$) wurde ebenfalls aus den durch die Messung der Gelpermeationschromatographie erhaltenen Daten mit Hilfe der folgenden Gleichung errechnet:

$$\overline{M}_w = \frac{\sum_i n_i M_i^2}{\sum_i n_i M_i} \quad \text{in g/mol}$$

wobei:

$M_i$ die molare Masse der Polymere der Fraktion *i* ist, so dass $M_i < M_{i+1}$ für alle *i*, in g/mol ist,
$n_i$ die Stoffmenge des Polymers der Fraktion *i*, in mol ist.

Das Zahlenmittel der Molmasse $\overline{M}_n$ wurde ebenfalls aus den durch die Messung der Gelpermeationschromatographie erhaltenen Daten mit Hilfe der folgenden Gleichung errechnet:

$$\overline{M}_n = \frac{\sum_i n_i M_i}{\sum_i n_i} \quad \text{in g/mol}$$

wobei:

$M_i$ die molare Masse der Polymere der Fraktion i ist, so dass $M_i < M_{i+1}$ für alle *i*, in g/mol ist,
$n_i$ die Stoffmenge des Polymers der Fraktion i, in mol ist.

Falls nicht explizit anders angegeben, wird die Schmelzenthapie mittels Dynamischer Differenzkalorimetrie (engl. Differential scanning calorimetry, DSC) anhand DIN EN ISO 11357-1:2017-02 bestimmt. Die Messung erfolgt an einer Q1000 (TA Instruments). Es werden zwei Aufheizungen und die Abkühlung im Bereich 20 °C bis 250 °C mit einer Heiz-/Kühlrate von 20 K/min durchgeführt. Die Bestimmung der Schmelzenthalpie erfolgt durch Integration der Fläche oberhalb der Glasübergangstemperatur bis circa 10 °C oberhalb des Endes des Schmelzpeaks.

Zur Herstellung der erfindungsgemäßen thermoplastischen aliphatischen Prepolymere werden eine oder mehrere aliphatische Polyisocyanate mit einem oder mehreren aliphatischen Diolen umgesetzt.

Als aliphatische Polyisocyanate eignen sich alle dem Fachmann bekannten aliphatischen Polyisocyanate, insbesondere monomere aliphatische Diisocyanate. Geeignete Verbindungen sind vorzugsweise solche des Molekulargewichtsbereiches von ≥ 140 g/mol bis ≤ 400 g/mol, wobei es unerheblich ist, ob diese mittels Phosgenierung oder nach phosgenfreien Verfahren erhalten wurden. Die Polyisocyanate und / oder dessen Vorläuferverbindungen können aus fossilen oder biologischen Quellen gewonnen worden sein. Vorzugsweise wird 1,6-Diisocyanatohexan (HDI) aus 1,6-Hexamethylendiamin und 1,5-Diisocyanatopentan aus 1,5-Pentamethylendiamin hergestellt, wobei 1,6-Hexamethylendiamin und 1,5-Pentamethylendiamin aus biologischen Quellen, vorzugsweise durch bakterielle Fermentation, gewonnen werden.

Beispiele für geeignete aliphatische Diisocyanate sind 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan und 1,10-Diisocyanatodecan.

Weitere ebenfalls geeignete Diisocyanate finden sich darüber hinaus beispielsweise in HOUBEN-WEYL "Methoden der organischen Chemie", Band E20 "Makromolekulare Stoffe", Georg Thieme Verlag, Stuttgart, New York 1987, S. 1587-1593 oder in Justus Liebigs Annalen der Chemie Band 562 (1949) S. 75 - 136.

Im Rahmen der vorliegenden Erfindung wird unter dem Begriff "monomeres Diisocyanat" ein Diisocyanat verstanden, welches keine dimeren, trimeren etc. Strukturen aufweist, Teil von dimeren, trimeren etc. Strukturen ist und/oder ein Reaktionsprodukt von einer NCO-Gruppe mit einer NCO-reaktiven Gruppe, wie beispielsweise Urethan-, Harnstoff-, Carbodiimid-, Acylharnstoff-, Amid-, Isocyanurat-, Allophanat-, Biuret-, Oxadiazintrion-, Uretdion- und/oder Iminooxadiazindionstrukturen.

In einer bevorzugten Ausführungsform ist das eine oder sind die mehreren aliphatischen Polyisocyanate ausgewählt aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus. In einer anderen bevorzugten Aufführungsform werden 1,5-Diisocyanatopentan und / oder 1,6-Diisocyanatohexan als aliphatische Polyisocyanate eingesetzt. In einer weiteren bevorzugten Aufführungsform wird nur 1,6-Diisocyanatohexan als aliphatisches Polyisocyanate eingesetzt.

Als aliphatische Diole eignen sich alle dem Fachmann bekannten organische Diole die ein Molekulargewicht von 62 g/mol bis 210 g/mol, vorzugsweise Diolen die ein Molekulargewicht im Bereich von 62 g/mol bis 120 g/mol, aufweisen. Die Diole und / oder dessen Vorläuferverbindungen können aus fossilen oder biologischen Quellen gewonnen worden sein. Bevorzugt sind die aliphatischen Diole zum Aufbau des erfindungsgemäßen thermoplastischen Polyurethanpolymers ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,2-Pentandiol, 1,3-Pentandiol, 1,4-Pentandiol, 1,5-Pentandiol, 1,2-Hexandiol, 1,3-Hexandiol, 1,4-Hexandiol, 1,5-Hexandiol und 1,6-Hexandiol oder einer Mischung aus mindestens zwei hieraus.

In einer bevorzugten Ausführungsform ist das eine oder sind die mehreren aliphatischen Diole ausgewählt sind aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und / oder Mischungen aus mindestens zwei hieraus. In einer weiteren bevorzugten Aufführungsform werden 1,3-Propandiol, 1,4-Butandiol, 1,6-Hexandiol und / oder Mischungen aus mindestens zwei hieraus als aliphatische Diole eingesetzt. In einer weiteren bevorzugten Aufführungsform werden 1,4-Butandiol und / oder 1,6-Hexandiol als aliphatische Diole eingesetzt. In einer anderen bevorzugten Aufführungsform wird nur 1,4-Butandiol als aliphatisches Diol eingesetzt.

Die Umsetzung der eine oder mehrere aliphatische Polyisocyanate mit einem oder mehreren aliphatischen Diolen zur Erzeugung des erfindungsgemäßen thermoplastischen aliphatischen Polyurethanprepolymers kann in Gegenwart von einem oder mehreren Katalysatoren stattfinden.

Geeignete erfindungsgemäße Katalysatoren sind die nach dem Stand der Technik bekannten und üblichen tertiären Amine, wie z. B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche, sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- und / oder Zinnverbindungen.

Der Katalysator wird in Mengen von 0,001 bis 2,0 Gew.-%, bevorzugt von 0,005 bis 1,0 Gew.-% besonders bevorzugt von 0,01 bis 0,1 Gew.-% bezogen auf die Diisocyanatkomponente eingesetzt. Der Katalysator kann in Substanz eingesetzt werden oder gelöst in der Diol-Komponente. Ein Vorteil ist hierbei, dass die dann erhaltenen thermoplastischen Polyurethane keine Verunreinigungen durch gegebenenfalls mitverwendete Lösungsmittel für den Katalysator enthalten. Die Zugabe des Katalysators kann dabei in einer oder mehreren Portionen oder auch kontinuierlich, z. B. mit Hilfe einer geeigneten Dosierpumpe, über die gesamte Dauer der Umsetzung erfolgen.

Alternativ können aber auch Mischungen des bzw. der Katalysatoren mit einem Katalysatorlösungsmittel, bevorzugt mit einem organischen Katalysatorlösungsmittel, eingesetzt werden. Der Verdünnungsgrad der Katalysatorlösungen kann dabei innerhalb eines sehr breiten Bereichs frei gewählt werden. Katalytisch wirksam sind Lösungen ab einer Konzentration von 0,001 Gew.-%.

Geeignete Lösungsmittel für den Katalysator sind beispielsweise gegenüber Isocyanatgruppen inerte Lösungsmittel wie z.B. Hexan, Toluol, Xylol, Chlorbenzol, Essigsäureethylester, Essigsäurebutylester, Diethylenglykoldimethylether, Dipropylenglykoldimethylether, Ethylenglykolmonomethyl- oder -ethyletheracetat, Diethylenglykolethyl- und -butyletheracetat, Propylenglykolmonomethyl-etheracetat, 1-Methoxypropyl-2-acetat, 3- Methoxy-n-butylacetat, Propylenglykoldiacetat, Aceton, Methylethylketon, Methylisobutylketon, Cyclohexanon, Lactone, wie $\beta$-Propiolacton, $\gamma$-Butyrolacton, $\epsilon$-Caprolacton und $\epsilon$-Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Es können aber auch Lösungsmittel für den Katalysator zum Einsatz kommen, die gegenüber Isocyanaten reaktive Gruppen tragen und in das Diisocyanat eingebaut werden können. Beispiele für solche Lösungsmittel sind ein- oder mehrwertige einfache Alkohole, wie z. B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z. B. 1-Methoxy-2-propanol, 3-Ethyl-3-hydroxymethyloxetan, Tetrahydrofurfurylalkohol, Ethylengylkol-monomethylether, Ethylenglykolmonoethylether, Ethylenglykolmonobutylether, Diethylenglykolmonomethylether, Diethylenglykolmonothylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z. B. Ethylenglykolmonoacetat, Propylenglykolmonolaurat, Glycerinmono- und diacetat, Glycerinmonobutyrat oder 2,2,4-Trimethyl-1,3-pentandiol-monoisobutyrat; ungesättigte Alkohole wie z. B. Allylalkohol, 1,1-Dimethyl-allylalkohol oder Oleinalkohol; araliphatische Alkohole wie z. B. Benzylalkohol; N-monosubstituierte Amide, wie z. B. N-Methylformamid, N-Methylacetamid, Cyanacetamid oder 2-Pyrrolidinon oder beliebige Gemische derartiger Lösungsmittel.

In einer bevorzugten Ausführungsform liegt das das Verhältnis $\overline{M}_Z/\overline{M}_W$ des erfindungsgemäßen thermoplastischen aliphatischen Polyurethanprepolymers in einem Bereich von 2,5 bis 5,5, vorzugsweise in einem Bereich von 2,5 bis 5.

In einer weiteren bevorzugten Ausführungsform weist das erfindungsgemäße thermoplastische aliphatische Polyurethanprepolymer ein massengemitteltes Molekulargewicht $\overline{M}_w$ in einem Bereich von 4000 g/mol bis 11000 g/mol, vorzugsweise in einem Bereich von 6000 g/mol bis 11000 g/mol, besonders bevorzugt in einem Bereich von 8000 g/mol bis 11000 g/mol auf, ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

In einer weiteren bevorzugten Ausführungsform weist das erfindungsgemäße thermoplastische aliphatische Polyurethanprepolymer eine Schmelzenthalpie H$_{fus}$ im Bereich von 60 J/g bis 110 J/g, vorzugsweise im Bereich von 70 J/g bis 110 J/g, besonders bevorzugt im Bereich von 80 J/g bis 110 J/g, noch bevorzugter im Bereich von 90 J/g bis 110 J/g, auf, ermittelt mit Dynamischer Differenzkalorimetrie (DSC) gemäß DIN EN ISO 11357-1:2017-02 mit einer Heizrate von 20 K/min im Bereich von 20 °C bis 250 °C.

In einer weiteren bevorzugten Ausführungsform liegt das Verhältnis $\overline{M}_w / \overline{M}_n$ des erfindungsgemäßen thermoplastischen aliphatischen Polyurethanprepolymers in einem Bereich von 5 bis 9, vorzugsweise in einem Bereich von 6 bis 8, wobei $\overline{M}_n$ das Zahlenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

In einer weiteren bevorzugten Ausführungsform ist das erfindungsgemäße thermoplastische aliphatische Polyurethanprepolymer ein Hydroxy-terminiertes thermoplastisches aliphatisches Polyurethanprepolymer.

In einer weiteren bevorzugten Ausführungsform ist das erfindungsgemäße thermoplastische aliphatische Polyurethanprepolymer durch Umsetzung von einem oder mehreren aliphatischen Polyisocyanatmonomeren mit einem oder mehreren aliphatischen Polyolmonomeren erhältlich und der durchschnittliche Polymerisationsgrad n des thermoplastischen aliphatischen Polyurethanprepolymers liegt in einem Bereich von 1,5 bis 19, bevorzugt im Bereich von 2 bis 9 und besonders bevorzugt im Bereich von 3,2 bis 6, wobei der durchschnittliche Polymerisationsgrad $n = \frac{x}{1-x}$ ist und wobei *x* das Verhältnis der NCO-Gruppen der eingesetzten Polyisocyanatmonomere zu den Hydroxy-Gruppen der eingesetzten Polyolmonomere ist.

Vorzugsweise werden als aliphatische Polyisocyanatmonomere aus 1,4-Diisocyanatobutan (BDI), 1,5-Diisocyanatopentan (PDI), 1,6-Diisocyanatohexan (HDI) oder eine Mischung von mindestens zwei hieraus, besonders bevorzugt wird 1,6-Diisocyanatohexan (HDI) eingesetzt.

Vorzugsweise werden als aliphatische Polyolmonomere 1,3-Propandiol, 1,4-Butandiol, 1,6-Hexandiol und / oder Mischungen aus mindestens zwei hieraus, besonders bevorzugt wird 1,4-Butandiol eingesetzt.

In einer weiteren bevorzugten Ausführungsform ist das erfindungsgemäße thermoplastische aliphatische Polyurethanprepolymer durch Umsetzung von einem oder mehreren aliphatischen Polyisocyanaten mit einem Molekulargewicht im Bereich von $\geq$ 140 g/mol bis $\leq$ 400 g/mol, vorzugsweise von einem oder mehreren aliphatischen Diisocyanaten mit einem Molekulargewicht im Bereich von 140 g/mol bis 170 g/mol, mit einem oder mehreren aliphatischen Diolen mit einem Molekulargewicht im Bereich von 62 g/mol bis 210 g/mol, vorzugsweise einem oder mehreren aliphatischen Diolen mit einem Molekulargewicht im Bereich von 62 g/mol bis 120 g/mol erhältlich.

In einer weiteren bevorzugten Ausführungsform besteht das erfindungsgemäße thermoplastische aliphatische Polyurethanprepolymer zu mindestens 96 Gew.-%, vorzugsweise zu mindestens 97 Gew.-%, besonders bevorzugt zu mindestens 98 Gew.-%, noch bevorzugter zu mindestens 99 Gew.-%, noch mehr bevorzugter zu mindestens 99,5 Gew.-% und am bevorzugtesten zu mindestens 99,9 Gew.-% aus dem Reaktionsprodukt der Umsetzung von 1,6-Hexamethylendiisocyanat mit 1,4-Butandiol, bezogen auf die Gesamtmasse des thermoplastischen aliphatischen Polyurethanprepolymers. Die Gew.-% beziehen sich dabei auf die Gesamtmasse der polymeren Bestandteile des thermoplastischen aliphatischen Polyurethanprepolymers.

Das erfindungsgemäße thermoplastische aliphatische Polyurethanprepolymer welches aus dem erfindungsgemäßen Verfahren erhalten wurde oder erhältlich ist, kann weiterhin noch nichtreagierte Monomere enthalten bzw. neben diesen im Verfahrensprodukt vorliegen. Die kommt beispielsweise dann vor, wenn ein Monomer, beispielsweise die Diolkomponente, im Überschuss eingesetzt wird. Die Menge an nicht-reagierten Monomeren liegen vorzugsweise in einem Bereich von 0,13 Gew.-% bis 16 Gew.-%, bevorzugt in einem Bereich von 0,53 Gew-% bis 12 Gew-% und besonders bevorzugt in einem Bereich von 1,5 Gew-% bis 7,7-Gew-% jeweils bezogen auf die Gesamtmasse der Zusammensetzung.

Ein weiterer Gegenstand der Erfindung betrifft ein Verfahren zur Herstellung eines erfindungsgemäßen thermoplastischen aliphatischen Polyurethanprepolymers umfassend die folgenden Schritte:

a) Mischen eines Polyisocyanatstroms (A) und eines Polyolstroms (B) in einer ersten Mischungseinrichtung (7), so dass ein Mischungsstrom (C) erhalten wird, wobei die Massenströme des Polyisocyanatstroms (A) und des Polyolstroms (B) so eingestellt werden, dass das molare Verhältnis von Isocyanat- zu Hydroxy-Gruppen im Mischungsstrom (C) in einem Bereich von 0,55 bis 0,85 oder in einem Bereich von 1,10 bis 1,55, vorzugsweise in einem Bereich von 0,55 bis 0,85 liegt.

b) Einleiten des Mischungsstroms (C) in einen Kreislaufstrom (D), der in einem Kreislauf geführt wird, wobei die Monomere des Polyisocyanatstroms (A) und des Polyolstroms (B) im Kreislaufstrom (D) zu Prepolymeren, vorzugsweise Hydroxy-terminierten Prepolymeren, weiterreagieren,

c) Abteilen eines Teilstroms vom Kreislaufstrom (D) als Prepolymerstrom (E) enthaltend das thermoplastische aliphatische Polyurethanprepolymer,

d) optional Extrudieren des Prepolymerstroms (E).

In Schritt a) des erfindungsgemäßen Verfahrens werden ein Polyisocyanatstrom (A) und ein Polyolstrom (B) in einer ersten Mischungseinrichtung (7) miteinander vermischt, so dass ein Mischungsstrom (C) erhalten wird. Dabei enthält oder besteht der Polyisocyanatstrom (A) vorzugsweise aus ein oder mehrere aliphatische Polyisocyanate mit einem Molekulargewicht im Bereich von $\geq$ 140 g/mol bis $\leq$ 400 g/mol, besonders bevorzugt ein oder mehrere aliphatische Diisocyanate mit einem Molekulargewicht im Bereich von 140 g/mol bis 170 g/mol, noch bevorzugter 1,6-Hexamethylendiisocyanat. Bevorzugt enthält oder besteht der Polyolstrom (B) aus ein oder mehrere aliphatische Diole mit einem Molekulargewicht im Bereich von 62 g/mol bis 210 g/mol, besonders bevorzugt ein oder mehreren aliphatischen Diole mit einem Molekulargewicht im Bereich von 62 g/mol bis 120 g/mol und noch bevorzugter 1,4-Butandiol. Bevorzugt weist der Polyisocyanatstrom (A) eine Temperatur von 20 °C bis 25 °C und unabhängig hiervon der Polyolstrom (B) eine Temperatur von 35 °C bis 45 °C auf. Die Massenströme des Polyisocyanatstroms (A) und des Polyolstroms (B) werden so eingestellt, dass das molare Verhältnis von Isocyanat- zu Hydroxy-Gruppen im Mischungsstrom (C) in einem Bereich von 0,55 bis 0,85 oder in einem Bereich von 1,10 bis 1,55, vorzugsweise in einem Bereich von 0,55 bis 0,85 liegt.
In einer bevorzugten Ausführungsform kann der Polyolstrom (B) mit dem Polyisocyanatstrom (A) bereits stromaufwärts der ersten Mischungseinrichtung (7) zusammengeführt werden. In einer anderen Ausführungsform werden der Polyolstrom (B) und der Polyisocyanatstrom (A) unabhängig voneinander in die erste Mischungseinrichtung (7) geführt. Bei der ersten Mischungseinrichtung (7) handelt es sich bevorzugt um einen Statikmischer.
In Schritt b) wird der Mischungsstrom (C) in einen Kreislaufstrom (D) eingeleitet, der in einem Kreislauf geführt wird, wobei die Monomere des Polyisocyanatstroms (A) und des Polyolstroms (B) im Kreislaufstrom (D) zu Prepolymeren, vorzugsweise Hydroxy-terminierten Prepolymeren, weiterreagieren. In Schritt c) wird ein Teilstrom vom Kreislaufstrom (D) als Prepolymerstrom (E) abgeteilt welcher die erfindungsgemäßen thermoplastischen aliphatischen Polyurethanprepolymere bzw. das erfindungsgemäße thermoplastische aliphatische Polyurethanprepolymer enthält.
Dem Kreislaufstrom (D) werden also Monomere des Polyisocyanatstroms (A) und des Polyolstroms (B) zugeführt und aus dem Kreislaufstrom wird thermoplastisches aliphatisches Prepolymer entnommen. Der Kreislaufstrom (D) enthält also eine Mischung aus Monomeren des Polyisocyanatstroms (A) und des Polyolstroms (B) sowie aus oligomeren Reaktionsprodukten und aus dem erfindungsgemäßen Prepolymer. Während des Durchlaufens des Kreislaufs reagieren die Monomere sowohl miteinander als auch mit im Kreislaufstrom bereits vorhandenen oligomeren Reaktionsprodukten dieser Monomere. Im Kreislaufstrom findet folglich eine kontinuierliche Reaktion unter Erhalt des erfindungsgemäßen thermoplastischen aliphatischen Prepolymers statt. Dabei können einige der thermoplastischen aliphatischen Prepolymere den Kreislaufstrom (D) bevorzugt mehrfach durchlaufen, bevor sie als Teilstrom abgeteilt werden. Dies ist von Vorteil, weil durch die Kreislaufführung ein großer Teil der insgesamt freiwerdenden Reaktionswärme bereits abgeführt und die Temperatur besser kontrolliert werden kann.
Der Kreislaufstrom (D) durchläuft bevorzugt mindestens zwei Mischungseinrichtungen (8, 9), wobei es sich insbesondere um mindestens eine temperierbare Mischungseinrichtung (9) handelt. Bevorzugt weist der Kreislaufstrom eine Temperatur von 160 °C bis 220 °C, bevorzugter von 170 °C bis 190 °C auf. In einer bevorzugten Ausführungsform wird zumindest der Kreislaufstrom (D) unter einem Druck im Bereich zwischen 2 bar absolut und 11 bar absolut im Kreis geführt.
Bevorzugt wird der Prepolymerstrom (E) in Schritt c) einlassseitig des Extruders in einen Extruder (16) eingeleitet. Bevorzugt werden bei dem Einleiten des Prepolymerstroms (E) in den Extruder (16) aus dem Prepolymerstrom (E) Gase und gasförmige Nebenprodukte entfernt. In einer Ausführungsform werden Gase und gasförmige Nebenprodukte entfernt, indem der Prepolymerstrom (E) durch eine Entlüftungseinrichtung (15) mit einem Unterdruck im Bereich von 0,1 mbar bis 10 mbar unter Normaldruck geführt wird, wobei die Entlüftungseinrichtung vorzugsweise an dem Extruder (16) angeordnet ist. Bevorzugt erfolgt die Entfernung von Gasen und gasförmigen Nebenprodukten durch eine atmosphärische Entgasung, d.h. durch eine Entlüftungseinrichtung (15), die an dem Extruder (16) angeordnet ist, ohne Anlegung eines Unterdrucks.

EP 3 838 950 A1

In einer weiteren bevorzugten Ausführungsform wird der Prepolymerstrom (E) in Schritt c) in einen Auffangbehälter (14) eingeleitet.

In einer weiteren bevorzugten Ausführungsform kann der Prepolymerstrom (E) in Schritt c) in einen Auffangbehälter (14) eingeleitet werden und / oder einlassseitig des Extruders in einen Extruder (16) eingeleitet werden, wie oben beschrieben.

Im optionalen Schritt d) wird der Prepolymerstrom (E) in einen Extruder (16) extrudiert unter Erhalt des thermoplastischen aliphatischen Polyurethanprepolymers als Extrudat. Auch möglich ist es den Prepolymerstrom (E) im Extruder (16) mit Hilfs- und Zusatzstoffen zu mischen.

Bei Hilfs- und Zusatzstoffen kann es sich beispielsweise um im Bereich der Thermoplasttechnologie gängige Hilfs- und Zusatzstoffe wie Farbstoffe, Füllstoffe, Verarbeitungshilfsmittel, Weichmacher, Nukleierungsmittel, Stabilisatoren, Flammschutzmittel, Entformungsmittel oder verstärkende Hilfs- und Zusatzstoffe handeln. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H. Müller (Hanser Verlag München 1990) oder der DE-A 29 01 774 zu entnehmen. Selbstverständlich kann es ebenfalls von Vorteil sein, mehrere Hilfs- und Zusatzstoffe mehrerer Typen zu verwenden.

Es ist auch möglich den Prepolymerstrom (E) mit Kettenverlängeren zu einem Polymer umzusetzen, vorzugsweise einem thermoplastischen Polyurethanpolymer und / oder einer thermoplastischen Polyurethan-Dispersion. Wenn der Prepolymerstrom (E) aus Hydroxy-terminierten Prepolymeren besteht oder diese enthält, dann können die Hydroxy-terminierten Prepolymere mit Hydroxygruppenreaktiven Kettenverlängeren wie beispielsweise Polyisocyanaten umgesetzt werden. Als Polyisocyanate eigen sich dabei alle dem Fachmann bekannten Polyisocyanate, vorzugsweise aliphatische Polyisocyanate, aromatische Polyisocyanate, cycloaliphatische Polyisocyanate und araliphatische Polyisocyanate. Wenn der Prepolymerstrom (E) aus NCO-terminierten Prepolymeren besteht oder diese enthält, dann können die NCO-terminierten Prepolymere mit NCO-reaktiven Kettenverlängeren wie beispielsweise organischen Diolen, Thiolen, Diaminen und Mischungen aus mindestens zwei hiervon umgesetzt werden. Wenn der Prepolymerstrom (E) in dem Extruder (16) zu einem Polymer umgesetzt werden soll, dann werden die beiden Komponenten durch die Bewegungen der Förderelemente im Inneren des Extruders (16) sowohl durchmischt als auch in Extruderarbeitsrichtung stromabwärts in Richtung einer Auslassöffnung des Extruders befördert. Dabei reagieren die Komponenten miteinander in einem kontinuierlichen Prozess, so dass das gewünschte Polymer erhalten wird. Bevorzugt nimmt die Viskosität der im Extruder befindlichen Komponenten in Extruderarbeitsrichtung mit fortschreitendem Polymerisationsgrad zu.

Bei dem Extruder (16) im optionalen Schritt (d) handelt es sich bevorzugt um einen Planetwalzenextruder oder einen Schneckenextruder, besonders bevorzugt um einen gleichläufigen Doppelschneckenextruder.

Bevorzugt umfasst das Verfahren die folgenden, zusätzlichen Schritte:

e) Abkühlen des Prepolymerstrom (E) aus Schritt c) oder des extrudierten Prepolymerstrom (E) aus Schritt d) unter den Schmelzpunkt des thermoplastischen aliphatischen Polyurethanprepolymers in einer Kühlungseinrichtung, und

f) Zerkleinerung des thermoplastischen aliphatischen Polyurethanprepolymers in einer Zerkleinerungseinrichtung.

Dabei wird durch das Abkühlen des Prepolymerstroms (E) aus Schritt c) oder des extrudierten Prepolymerstroms (E) aus Schritt d) ein Feststoff erhalten, der in der Zerkleinerungseinrichtung (18) bevorzugt zu einem Granulat zerkleinert wird. Dieses Granulat kann in einem Extrusionsverfahren zur Weiterverarbeitung aufgeschmolzen und beispielsweise mit Hilfs- und Zusatzstoffen umgesetzt werden oder zu einem Polymer umgesetzt werden.

Eine weitere Ausführungsform die Erfindung betrifft ein thermoplastisches aliphatisches Polyurethanprepolymer erhältlich oder erhalten durch das erfindungsgemäße Verfahren.

Eine weitere Ausführungsform die Erfindung betrifft eine Zusammensetzung enthaltend mindestens erfindungsgemäße thermoplastische aliphatische Polyurethanprepolymere. Die Zusammensetzung enthält vorzugsweise erfindungsgemäße thermoplastische aliphatische Polyurethanprepolymere und Butandiol. Bei dem Butandiol handelt es sich vorzugsweise um 1,4-Butandiol.

Eine weitere Ausführungsform die Erfindung betrifft die Verwendung von erfindungsgemäßen thermoplastischen aliphatischen Polyurethanprepolymeren oder einer erfindungsgemäßen Zusammensetzung zur Herstellung von thermoplastischem Polyurethan und / oder thermoplastischen Polyurethan-Dispersionen.

Eine weitere Ausführungsform der Erfindung betrifft eine Vorrichtung zur Durchführung des erfindungsgemäßen Verfahrens umfassend:

einen Polyisocyanat-Vorratsbehälter (1) von dem eine Polyisocyanatleitung (19) zur Förderung eines Polyisocyanatstroms (A) abgeht, die in eine erste Mischungseinrichtung (7) mündet;
optional eine der Polyisocyanatleitung (19) zugeordnete erste Fördereinrichtung (2) zur Förderung des Polyisocyanatstroms (A);

optional einen an die Polyisocyanatleitung (19) angeschlossenen ersten Massendurchflussmesser (3);

einen Polyol-Vorratsbehälter (4) von dem eine Polyolleitung (20) zur Förderung eines Polyolstroms (B) abgeht, die in die erste Mischungseinrichtung (7) mündet, wobei die Polyolleitung (20) insbesondere stromaufwärts der ersten Mischungseinrichtung (7) mit der Polyisocyanatleitung (19) zusammengeführt wird;

optional eine der Polyolleitung (20) zugeordnete zweite Fördereinrichtung (5) zur Förderung des Polyolstroms (B);

optional einen an der Polyolleitung (20) angeschlossenen zweiten Massendurchflussmesser (6); eine Kreislaufzuführungsleitung (22) zur Förderung eines aus der ersten Mischungseinrichtung (7) austretenden Mischungsstroms (C), die in eine Kreislaufleitung (24) zur Förderung des Kreislaufstroms (D) und chemischen Umsetzung der Komponenten des Kreislaufstroms (D) mit den Komponenten des Mischungsstroms (C) mündet;

wobei die Kreislaufleitung (24) vorzugsweise in Strömungsrichtung eine zweite Mischungseinrichtung (8), eine temperierbare Mischungseinrichtung (9) sowie eine temperierbare Fördereinrichtung (10) umfasst; und entweder eine von der Kreislaufleitung (24) abgehende und in einen Auffangbehälter (14) mündende Prepolymerzuführungsleitung (25) zur Förderung eines Prepolymerstroms (E); oder

eine von der Kreislaufleitung (24) abgehende und einlassseitig in einen Extruder (16) mündende Prepolymerzuführungsleitung (25) zur Förderung eines Prepolymerstroms (E);

ein in der Prepolymerzuführungsleitung (25) vorgesehenes Druckregelventil (12) zur Regulierung des Drucks des Prepolymerstroms (E);

optional ein in der Prepolymerzuführungsleitung (25) angeordnetes und insbesondere stromabwärts des Druckregelventils (12) positioniertes Dreiwegeventil (13), von dem eine erste Prepolymerzuführungsleitung (25) abgeht, die einlassseitig in den Extruder (16) mündet zur Förderung eines Prepolymerstroms (E) und von dem eine zweite in einen Auffangbehälter (14) mündende Prepolymerzuführungsleitung (25) abgeht, über die der Prepolymerstrom (E) insbesondere bei Inbetriebnahme, Außerbetriebnahme oder Störung der Vorrichtung ganz oder teilweise in den Auffangbehälter (14) geführt werden kann;

optional eine hinter dem Auslass des Extruders (16) angeordnete Kühlungseinrichtung (17), vorzugsweise ein Wasserbad, zur Abkühlung des thermoplastischen aliphatischen Polyurethanprepolymers unter seinen Schmelzpunkt; und

optional eine sich an die Kühlungseinrichtung (17) anschließende Zerkleinerungseinrichtung (18) zur Zerkleinerung des abgekühlten thermoplastischen aliphatischen Polyurethanprepolymers.

In einer bevorzugten Ausführungsform der Vorrichtung, mündet die Polyolleitung (20) in die erste Mischungseinrichtung (7), d.h. sie mündet nicht stromaufwärts der ersten Mischungseinrichtung in die Polyisocyanatleitung (19).

Bevorzugt wird als erste Fördereinrichtung (2) und/oder als zweite Fördereinrichtung (5) unabhängig voneinander eine Zahnringpumpe und/oder als temperierbare Fördereinrichtung (10) eine Zahnradpumpe eingesetzt.

Bevorzugt wird als erste und/oder zweite Mischungseinrichtung (7, 8) und/oder als temperierbare Mischungseinrichtung (9) unabhängig voneinander ein Statikmischer eingesetzt.

Bevorzugt besteht die Kreislaufleitung (24) aus doppelwandigen, mit einem Heizmittel beheizbaren Leitungen, wobei bevorzugt auch die zweite Mischungseinrichtung (8), die temperierbare Mischungseinrichtung (9) sowie die temperierbare Fördereinrichtung (10) mit einem Heizmittel beheizbar sind. Dabei ist das Heizmittel bevorzugt für eine Temperatur von 160 °C bis 220 °C, bevorzugter von 170 °C bis 190 °C, geeignet.

Bevorzugt ist der Extruder (16) ein Planetwalzenextruder oder ein Schneckenextruder, wobei der Extruder (16) bevorzugter ein gleichläufiger Doppelschneckenextruder ist.

Die Erfindung betrifft insbesondere die folgenden Ausführungsformen:

In einer ersten Ausführungsform betrifft die Erfindung ein thermoplastisches aliphatisches Polyurethanprepolymer, dadurch gekennzeichnet, dass das Verhältnis $\overline{M_z} / \overline{M_w}$ des thermoplastischen aliphatischen Polyurethanprepolymers in einem Bereich von 2,3 bis 6 liegt und das Verhältnis $\overline{M_w} / \overline{M_n}$ des thermoplastischen aliphatischen Polyurethanprepolymers in einem Bereich von 4 bis 10 liegt, wobei $\overline{M_z}$ das Zentrifugenmittel der Molmasse, $\overline{M_n}$ das Zahlenmittel der Molmasse und $\overline{M_w}$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

In einer zweiten Ausführungsform betrifft die Erfindung ein thermoplastisches aliphatisches Polyurethanprepolymer nach Ausführungsform 1, wobei das Verhältnis $\overline{M_z} / \overline{M_w}$ des thermoplastischen aliphatischen Polyurethanprepolymers in einem Bereich von 2,5 bis 5,5, vorzugsweise in einem Bereich von 2,5 bis 5 liegt.

In einer dritten Ausführungsform betrifft die Erfindung ein thermoplastisches aliphatisches Polyurethanprepolymer nach einer der Ausführungsformen 1 oder 2, wobei das thermoplastische aliphatische Polyurethanprepolymer ein massengemitteltes Molekulargewicht $\overline{M_w}$ in einem Bereich von 4000 g/mol bis 11000 g/mol, vorzugsweise in einem Bereich von 6000 g/mol bis 11000 g/mol, besonders bevorzugt in einem Bereich von 8000 g/mol bis 11000 g/mol aufweist, ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

In einer vierten Ausführungsform betrifft die Erfindung ein thermoplastisches aliphatisches Polyurethanprepolymer nach einer der Ausführungsformen 1 bis 3, wobei das thermoplastische aliphatische Polyurethanprepolymer eine Schmelzenthalpie H$_{fus}$ im Bereich von 60 J/g bis 110 J/g, vorzugsweise im Bereich von 70 J/g bis 110 J/g, besonders bevorzugt im Bereich von 80 J/g bis 110 J/g, noch bevorzugter im Bereich von 90 J/g bis 110 J/g, aufweist, ermittelt mit Dynamischer Differenzkalorimetrie (DSC) gemäß DIN EN ISO 11357-1:2017-02 mit einer Heizrate von 20 K/min im Bereich von 20 °C bis 250 °C.

In einer fünften Ausführungsform betrifft die Erfindung ein thermoplastisches aliphatisches Polyurethanprepolymer nach einer der Ausführungsformen 1 bis 4, wobei das Verhältnis $\overline{M}_w/\overline{M}_n$ des thermoplastischen aliphatischen Polyurethanprepolymers in einem Bereich von 5 bis 9, vorzugsweise in einem Bereich von 6 bis 8 liegt, wobei $\overline{M}_n$ das Zahlenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

In einer sechsten Ausführungsform betrifft die Erfindung ein thermoplastisches aliphatisches Polyurethanprepolymer nach einer der Ausführungsformen 1 bis 5, wobei das thermoplastische aliphatische Polyurethanprepolymer ein Hydroxy-terminiertes thermoplastisches aliphatisches Polyurethanprepolymer ist.

In einer siebten Ausführungsform betrifft die Erfindung ein thermoplastisches aliphatisches Polyurethanprepolymer nach einer der Ausführungsformen 1 bis 6, wobei das thermoplastische aliphatische Polyurethanprepolymer durch Umsetzung von einem oder mehreren aliphatischen Polyisocyanatmonomeren mit einem oder mehreren aliphatischen Polyolmonomeren erhältlich ist und wobei der durchschnittliche Polymerisationsgrad n des thermoplastischen aliphatischen Polyurethanprepolymers in einem Bereich von 1,2 bis 19, bevorzugt im Bereich von 2 bis 9 und besonders bevorzugt im Bereich von 3,2 bis 6 liegt, wobei der durchschnittliche Polymerisationsgrad

$$n = \frac{x}{1-x}$$ ist und wobei x das Verhältnis der NCO-Gruppen der eingesetzten Polyisocyanatmonomere zu den Hydroxy-Gruppen der eingesetzten Polyolmonomere ist.

In einer achten Ausführungsform betrifft die Erfindung ein thermoplastisches aliphatisches Polyurethanprepolymer nach einer der Ausführungsformen 1 bis 7, wobei als aliphatische Polyisocyanatmonomere 1,4-Diisocyanatobutan (BDI), 1,5-Diisocyanatopentan (PDI), 1,6-Diisocyanatohexan (HDI) oder eine Mischung von mindestens zwei hieraus eingesetzt werden, besonders bevorzugt wird 1,6-Diisocyanatohexan (HDI) eingesetzt.

In einer neunten Ausführungsform betrifft die Erfindung ein thermoplastisches aliphatisches Polyurethanprepolymer nach einer der Ausführungsformen 1 bis 8, wobei als aliphatische Polyolmonomere 1,3-Propandiol, 1,4-Butandiol, 1,6-Hexandiol und / oder Mischungen aus mindestens zwei hieraus eingesetzt werden, besonders bevorzugt wird 1,4-Butandiol eingesetzt.

In einer zehnten Ausführungsform betrifft die Erfindung ein thermoplastisches aliphatisches Polyurethanprepolymer nach einer der Ausführungsformen 1 bis 9, wobei das thermoplastische aliphatische Polyurethanprepolymer durch Umsetzung von einem oder mehreren aliphatischen Polyisocyanaten mit einem Molekulargewicht im Bereich von ≥ 140 g/mol bis ≤ 400 g/mol, vorzugsweise von einem oder mehreren aliphatischen Diisocyanaten mit einem Molekulargewicht im Bereich von 140 g/mol bis 170 g/mol, mit einem oder mehreren aliphatischen Diolen mit einem Molekulargewicht im Bereich von 62 g/mol bis 210 g/mol, vorzugsweise einem oder mehreren aliphatischen Diolen mit einem Molekulargewicht im Bereich von 62 g/mol bis 120 g/mol erhältlich ist.

In einer elften Ausführungsform betrifft die Erfindung ein thermoplastisches aliphatisches Polyurethanprepolymer nach einer der Ausführungsformen 1 bis 10, wobei das thermoplastische aliphatische Polyurethanprepolymer zu mindestens 96 Gew.-%, vorzugsweise zu mindestens 97 Gew.-%, besonders bevorzugt zu mindestens 98 Gew.-%, noch bevorzugter zu mindestens 99 Gew.-%, noch mehr bevorzugter zu mindestens 99,5 Gew.-% und am bevorzugtesten zu mindestens 99,9 Gew.-% aus dem Reaktionsprodukt der Umsetzung von 1,6-Hexamethylendiisocyanat mit 1,4-Butandiol besteht, bezogen auf die Gesamtmasse des thermoplastischen aliphatischen Polyurethanprepolymers.

In einer zwölften Ausführungsform betrifft die Erfindung ein thermoplastisches aliphatisches Polyurethanprepolymer nach einer der Ausführungsformen 1 bis 11, wobei die Umsetzung der aliphatischen Polyolmonomere mit den aliphatische Polyisocyanatmonomeren zum thermoplastischen aliphatischen Polyurethanprepolymer katalysatorfrei durchgeführt wird.

In einer dreizehnten Ausführungsform betrifft die Erfindung ein Verfahren zur Herstellung eines thermoplastischen aliphatischen Polyurethanprepolymers gemäß einer der Ausführungsformen 1 bis 12 umfassend die folgenden Schritte:

a) Mischen eines Polyisocyanatstroms (A) und eines Polyolstroms (B) in einer ersten Mischungseinrichtung (7), so dass ein Mischungsstrom (C) erhalten wird, wobei die Massenströme des Polyisocyanatstroms (A) und des Polyolstroms (B) so eingestellt werden, dass das molare Verhältnis von Isocyanat- zu Hydroxy-Gruppen im Mischungsstrom (C) in einem Bereich von 0,55 bis 0,85 oder in einem Bereich von 1,10 bis 1,55, vorzugsweise in einem Bereich von 0,55 bis 0,85 liegt,

b) Einleiten des Mischungsstroms (C) in einen Kreislaufstrom (D), der in einem Kreislauf geführt wird, wobei die Monomere des Polyisocyanatstroms (A) und des Polyolstroms (B) im Kreislaufstrom (D) zu Prepolymeren, vorzugsweise Hydroxy-terminierten Prepolymeren, weiterreagieren,

c) Abteilen eines Teilstroms vom Kreislaufstrom (D) als Prepolymerstrom (E) enthaltend das thermoplastische aliphatische Polyurethanprepolymer,

d) optional Extrudieren des Prepolymerstroms (E).

In einer vierzehnten Ausführungsform betrifft die Erfindung ein Verfahren gemäß der Ausführungsform 13, wobei der Polyisocyanatstrom (A) ein oder mehrere aliphatische Polyisocyanate mit einem Molekulargewicht im Bereich von ≥ 140 g/mol bis ≤ 400 g/mol, vorzugsweise ein oder mehrere aliphatische Diisocyanate mit einem Molekulargewicht im Bereich von 140 g/mol bis 170 g/mol und besonders bevorzugt 1,6-Hexamethylendiisocyanat enthält oder daraus besteht.

In einer fünfzehnten Ausführungsform betrifft die Erfindung ein Verfahren gemäß einer der Ausführungsformen 13 oder 14, wobei der Polyolstrom (B) ein oder mehrere aliphatische Diole mit einem Molekulargewicht im Bereich von 62 g/mol bis 210 g/mol, vorzugsweise ein oder mehrere aliphatischen Diole mit einem Molekulargewicht im Bereich von 62 g/mol bis 120 g/mol und besonders bevorzugt 1,4-Butandiol enthält oder daraus besteht.

In einer sechzehnten Ausführungsform betrifft die Erfindung ein Verfahren gemäß einer der Ausführungsformen 13 bis 15, wobei der Polyisocyanatstrom (A) eine Temperatur von 20 °C bis 25 °C und unabhängig hiervon der Polyolstrom (B) eine Temperatur von 35 °C bis 45 °C aufweist.

In einer siebzehnten Ausführungsform betrifft die Erfindung ein Verfahren gemäß einer der Ausführungsformen 13 bis 16, wobei bei dem Einleiten des Prepolymerstroms in den Extruder aus dem Prepolymerstrom Gase und gasförmige Nebenprodukte entfernt werden, bevorzugt indem der Prepolymerstrom durch eine Entlüftungseinrichtung mit einem Unterdruck von 0,1 mbar bis 10 mbar unter Normaldruck geführt wird, wobei die Entlüftungseinrichtung vorzugsweise an dem Extruder angeordnet ist.

In einer achtzehnten Ausführungsform betrifft die Erfindung ein Verfahren gemäß einer der Ausführungsformen 13 bis 17, wobei zumindest der Kreislaufstrom (D) unter einem Druck im Bereich zwischen 2 bar absolut und 11 bar absolut im Kreis geführt wird.

In einer neunzehnten Ausführungsform betrifft die Erfindung ein Verfahren gemäß einer der Ausführungsformen 13 bis 18, wobei das Verfahren die folgenden, zusätzlichen Schritte umfasst:

e) Abkühlen des Prepolymerstroms (E) aus Schritt c) oder des extrudierten Prepolymerstroms (E) aus Schritt d) unter den Schmelzpunkt des thermoplastischen aliphatischen Polyurethanprepolymers in einer Kühlungseinrichtung, und

f) Zerkleinerung des thermoplastischen aliphatischen Polyurethanprepolymers in einer Zerkleinerungseinrichtung.

In einer zwanzigsten Ausführungsform betrifft die Erfindung ein Verfahren gemäß einer der Ausführungsformen 13 bis 19, wobei der Prepolymerstrom (E) in Schritt c) einlassseitig des Extruders in einen Extruder (16) eingeleitet wird.

In einer einundzwanzigsten Ausführungsform betrifft die Erfindung ein Verfahren gemäß einer der Ausführungsformen 13 bis 20, wobei der Prepolymerstrom (E) in Schritt c) in einen Auffangbehälter (14) eingeleitet wird und / oder einlassseitig des Extruders in einen Extruder (16) eingeleitet wird.

In einer zweiundzwanzigsten Ausführungsform betrifft die Erfindung ein Verfahren gemäß einer der Ausführungsformen 13 bis 21, wobei der Extruder (16) im optionalen Schritt (d) ein Planetwalzenextruder oder ein Schneckenextruder, besonders bevorzugt ein gleichläufiger Doppelschneckenextruder ist.

In einer dreiundzwanzigsten Ausführungsform betrifft die Erfindung ein thermoplastisches Polyurethanprepolymer erhältlich oder erhalten durch ein Verfahren gemäß einer der Ausführungsformen 13 bis 22.

In einer vierundzwanzigsten Ausführungsform betrifft die Erfindung eine Zusammensetzung enthaltend mindestens thermoplastische aliphatische Polyurethanprepolymere nach einem der Ausführungsformen 1 bis 12, vorzugsweise mindestens thermoplastische aliphatische Polyurethanprepolymere nach einem der Ausführungsformen 1 bis 12 und Butandiol, insbesondere 1,4-Butandiol.

In einer fünfundzwanzigsten Ausführungsform betrifft die Erfindung die Verwendung von thermoplastischen aliphatischen Polyurethanprepolymeren nach einer der Ausführungsformen 1 bis 12 oder einer Zusammensetzung nach Ausführungsform 24 zur Herstellung von thermoplastischem Polyurethan und / oder thermoplastischen Polyurethan-Dispersionen.

In einer sechsundzwanzigsten Ausführungsform betrifft die Erfindung die Verwendung eines thermoplastischen Polyurethans gemäß der Ausführungsform 25 in einem Formgebungsverfahren unter Aufschmelzen des thermoplastischen Polyurethans, insbesondere zur Herstellung von Bauteilen von Fahrzeugen.

In einer siebenundzwanzigsten Ausführungsform betrifft die Erfindung eine Vorrichtung zur Durchführung eines Verfahrens nach einem der Ansprüche 10 bis 14, umfassend:

einen Polyisocyanat-Vorratsbehälter (1) von dem eine Polyisocyanatleitung (19) zur Förderung eines Polyisocyanatstroms (A) abgeht, die in eine erste Mischungseinrichtung (7) mündet;

optional eine der Polyisocyanatleitung (19) zugeordnete erste Fördereinrichtung (2) zur Förderung des Polyisocyanatstroms (A);

optional einen an die Polyisocyanatleitung (19) angeschlossenen ersten Massendurchflussmesser (3);

einen Polyol-Vorratsbehälter (4) von dem eine Polyolleitung (20) zur Förderung eines Polyolstroms (B) abgeht, die in die erste Mischungseinrichtung (7) mündet, wobei die Polyolleitung (20) insbesondere stromaufwärts der ersten Mischungseinrichtung (7) mit der Polyisocyanatleitung (19) zusammengeführt wird;

optional eine der Polyolleitung (20) zugeordnete zweite Fördereinrichtung (5) zur Förderung des Polyolstroms (B);

optional einen an der Polyolleitung (20) angeschlossenen zweiten Massendurchflussmesser (6); eine Kreislaufzuführungsleitung (22) zur Förderung eines aus der ersten Mischungseinrichtung (7) austretenden Mischungsstroms (C), die in eine Kreislaufleitung (24) zur Förderung des Kreislaufstroms (D) und chemischen Umsetzung der Komponenten des Kreislaufstroms (D) mit den Komponenten des Mischungsstroms (C) mündet;

wobei die Kreislaufleitung (24) vorzugsweise in Strömungsrichtung eine zweite Mischungseinrichtung (8), eine temperierbare Mischungseinrichtung (9) sowie eine temperierbare Fördereinrichtung (10) umfasst; und entweder eine von der Kreislaufleitung (24) abgehende und in einen Auffangbehälter (14) mündende Prepolymerzuführungsleitung (25) zur Förderung eines Prepolymerstroms (E); oder

eine von der Kreislaufleitung (24) abgehende und einlassseitig in einen Extruder (16) mündende Prepolymerzuführungsleitung (25) zur Förderung eines Prepolymerstroms (E);

ein in der Prepolymerzuführungsleitung (25) vorgesehenes Druckregelventil (12) zur Regulierung des Drucks des Prepolymerstroms (E);

optional ein in der Prepolymerzuführungsleitung (25) angeordnetes und insbesondere stromabwärts des Druckregelventils (12) positioniertes Dreiwegeventil (13), von dem eine erste Prepolymerzuführungsleitung (25) abgeht, die einlassseitig in den Extruder (16) mündet, zur Förderung eines Prepolymerstroms (E) und von dem eine zweite in einen Auffangbehälter (14) mündende Prepolymerzuführungsleitung (25) abgeht, über die der Prepolymerstrom (E) insbesondere bei Inbetriebnahme, Außerbetriebnahme oder Störung der Vorrichtung ganz oder teilweise in den Auffangbehälter (14) geführt werden kann;

optional eine hinter dem Auslass des Extruders (16) angeordnete Kühlungseinrichtung (17), vorzugsweise ein Wasserbad, zur Abkühlung des thermoplastischen aliphatischen Polyurethanprepolymers unter seinen Schmelzpunkt; und

optional eine sich an die Kühlungseinrichtung (17) anschließende Zerkleinerungseinrichtung (18) zur Zerkleinerung des abgekühlten thermoplastischen aliphatischen Polyurethanprepolymers.

In einer achtundzwanzigsten Ausführungsform betrifft die Erfindung eine Vorrichtung nach Ausführungsform 27, wobei als erste Fördereinrichtung (2) und/oder als zweite Fördereinrichtung (5) unabhängig voneinander eine Zahnringpumpe und/oder als temperierbare Fördereinrichtung (10) eine Zahnradpumpe eingesetzt wird.

In einer neunundzwanzigsten Ausführungsform betrifft die Erfindung eine Vorrichtung gemäß einer der Ausführungsformen 27 oder 28, wobei als erste und/oder zweite Mischungseinrichtung (7, 8) und/oder als temperierbare Mischungseinrichtung (9) unabhängig voneinander ein Statikmischer eingesetzt wird.

In einer dreißigsten Ausführungsform betrifft die Erfindung eine Vorrichtung gemäß einer der Ausführungsformen 27 bis 29, wobei die Kreislaufleitung (24) und die Prepolymerzuführungsleitung (25) aus doppelwandigen, mit einem Heizmittel beheizbaren Leitungen bestehen, wobei bevorzugt auch die zweite Mischungseinrichtung (8), die temperierbare Mischungseinrichtung (9) sowie die temperierbare Fördereinrichtung (10) mit einem Heizmittel beheizbar sind, wobei das Heizmittel bevorzugt für eine Temperatur von 160 °C bis 220 °C geeignet ist.

In einer einunddreißigsten Ausführungsform betrifft die Erfindung eine Vorrichtung gemäß Ausführungsform 30, wobei das Heizmittel für eine Temperatur von 160 °C bis 220 °C geeignet ist, bevorzugt von 170 °C bis 190 °C.

In einer zweiunddreißigsten Ausführungsform betrifft die Erfindung eine Vorrichtung gemäß einer der Ausführungsformen 27 bis 31, wobei der Extruder (16) ein Planetwalzenextruder oder ein Schneckenextruder ist, wobei der Extruder bevorzugt ein gleichläufiger Doppelschneckenextruder ist.

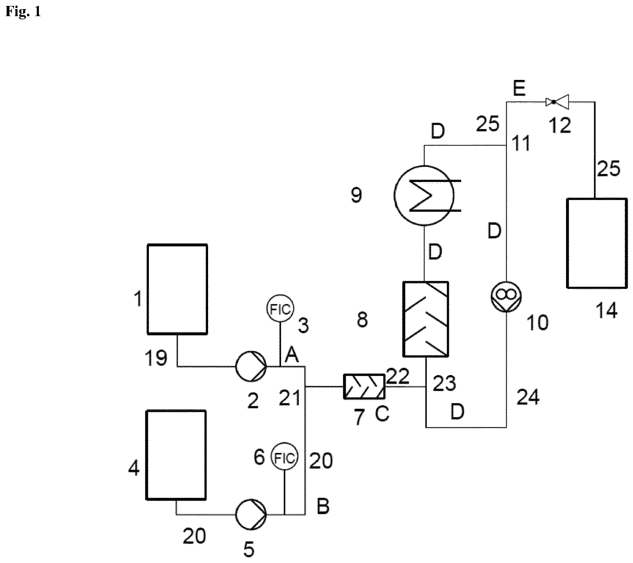

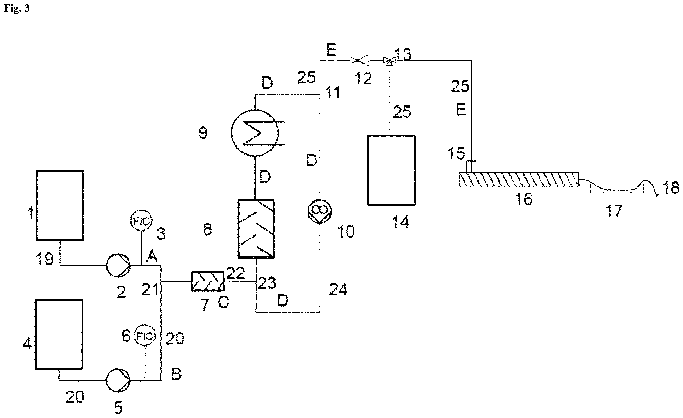

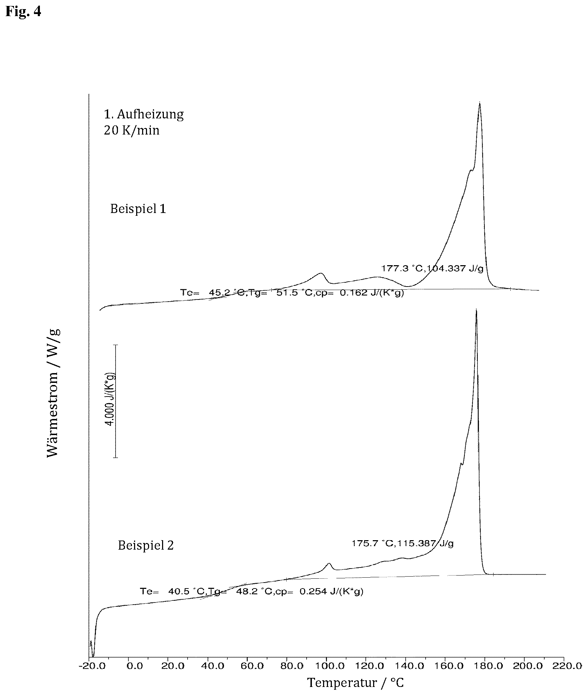

Die vorliegende Erfindung wird im Folgenden anhand der Figuren 1 bis 4 näher erörtert. Darin zeigt

Fig. 1  eine bevorzugte Vorrichtung zur Durchführung des erfindungsgemäßen Verfahrens,

Fig. 2    eine weitere bevorzugte Vorrichtung zur Durchführung des erfindungsgemäßen Verfahrens,

Fig. 3    eine weitere bevorzugte Vorrichtung zur Durchführung des erfindungsgemäßen Verfahrens,

Fig. 4    ein Thermogramm aus einer Differentialthermoanalyse eines erfindungsgemäßen thermoplastischen aliphatischen Polyurethanprepolymers, das mit dem erfindungsgemäßen Verfahren hergestellt wurde und eines Polyurethanprepolymers das nach einem anderen Verfahren hergestellt wurde

**Beispiele**

Die vorliegende Erfindung wird anhand der nachfolgenden Beispiele weiter erläutert, ohne jedoch darauf beschränkt zu sein.

Es wurden zwei thermoplastische Polyurethanprepolymere miteinander verglichen, die mit unterschiedlichen Syntheseverfahren hergestellt wurden, dabei wurden die Schmelzenthalpie und das Molekulargewicht dieser beiden Polyurethanprepolymere untersucht.

Bestimmung der Schmelzenthalpie

Die Bestimmung der Schmelzenthalpie erfolgt mittels Dynamischer Differenzkalorimetrie (engl. Differential scanning calorimetry, DSC) anhand DIN EN ISO 11357-1:2017-02. Die Messung erfolgte an einer Q1000 (TA Instruments). Es wurden zwei Aufheizungen und die Abkühlung im Bereich 20 °C bis 250 °C mit einer Heiz-/Kühlrate von 20 K/min durchgeführt. Die Probenmasse Betrug circa 6 mg. Der Spülgasstrom (Stickstoff) betrug 50 ml/min.

Die Bestimmung der Schmelzenthalpie erfolgte durch Integration der Fläche oberhalb der Glasübergangstemperatur bis circa 10 °C oberhalb des Endes des Schmelzpeaks.

Bestimmung des Molekulargewichtes

GPC-Methode zur Bestimmung von $M_n$ und $M_w$:

Das Zahlenmittel und das Massenmittel der Molmasse wurden mit Hilfe einer Gelpermeationschromatographie (GPC) bestimmt, wobei die zu untersuchende Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde,.

| | |
|---|---|
| Pumpe: | HPLC-Pumpe 515 (Waters GmbH) |
| Detektor: | Smartline RI-Detektor 2300 (Knauer Wissenschaftliche Geräte GmbH) |
| Säulen: | 1 Vorsäule, 1000 Å PSS PFG 7$\mu$m, 300 Å PSS PFG 7$\mu$m, 100 Å PSS PFG 7$\mu$m in dieser Reihenfolge (PSS Polymer Standards Service GmbH) |
| Entgasung: | Degaser PSS (PSS Polymer Standards Service GmbH) |
| Injektionsvolumen: | 100 Mikroliter |
| Temperatur: | 23 °C - 25 °C |
| Molmassen-Standard: | Polymethylmethacrylat-Standard-Kit (PSS Polymer Standards Service GmbH) |

Falls nicht explizit anders angegeben, wurden in der vorliegende Erfindung das Zentrifugenmittel der Molmasse $M_z$ mittels Gelpermeationschromatographie (GPC) unter Verwendung von Polymethylmethacrylat als Standard bestimmt. Die zu vermessende Probe wurde in einer Lösung von 3 g Kaliumtrifluoracetat in 400 Kubikzentimeter Hexafluorisopropanol aufgelöst (Probenkonzentration ca. 2 mg/Kubikzentimeter) und dann mit einer Flussrate von 1 Kubikzentimeter/Minute über eine Vorsäule gegeben und dann über drei in Reihe geschaltete Chromatographiesäulen getrennt, zuerst über eine 1000 Å PSS PFG 7 $\mu$m Chromatographiesäule, dann über eine 300 Å PSS PFG 7 $\mu$m Chromatographiesäule und zuletzt über eine 100 Å PSS PFG 7 $\mu$m Chromatographiesäule. Als Detektor wurde ein Brechungsindex-Detektor (RI-Detektor) verwendet. Das zahlengemittelte Molekulargewicht wurde aus den durch die Messung der Gelpermeationschromatographie erhaltenen Daten mit Hilfe der folgenden Gleichung errechnet:

$$\overline{M}_n = \frac{\sum_i n_i M_i}{\sum_i n_i} \quad \text{in g/mol}$$

wobei,

$M_i$ die molare Masse der Polymere der Fraktion i ist, so dass $M_i < M_{i+1}$ für alle i, in g/mol ist, $n_i$ die Stoffmenge des Polymers der Fraktion i, in mol ist.

Das zentrifugengemittelte Molekulargewicht wurde aus den durch die Messung der Gelpermeationschromatographie erhaltenen Daten mit Hilfe der folgenden Gleichung errechnet:

$$\overline{M}_z = \frac{\sum_i n_i M_i^3}{\sum_i n_i M_i^2},$$

wobei, $M_i$ die molare Masse der Polymere der Fraktion i ist, so dass $M_i < M_{i+1}$ für alle *i*, in g/mol ist, $n_i$ die Stoffmenge des Polymers der Fraktion i, in mol ist.

Erfindungsgemäßes Beispiel 1

Aus einer 250 - Liter - Vorlage 1 für 1,6-Hexamethylendiisocyanat wurde mit Hilfe einer Zahnringpumpe 2 (Firma HNP, MZR 7255) ein Polyisocyanatstrom (A) bestehend aus 1,6-Hexamethylendiisocyanat zu einem Statikmischer (7) gefördert. Der Durchsatz des Polyisocyanatstroms (A) wurde mittels eines Massendurchflussmessers (3) (Firma Bronkhorst, Mini Cori-Flow M1X, max. Durchfluss 12 kg/h) gemessen. Die Temperatur des 1,6-Hexamethylendiisocyanats betrug dabei Raumtemperatur.

Aus einer 250 - Liter - Vorlage (4) für 1,4-Butandiol wurde mit Hilfe einer Zahnringpumpe (5) (Firma HNP, MZR 7205) ein Polyolstrom (B) bestehend aus 1,4-Butandiol zum Statikmischer (7) gefördert. Der Durchsatz des Polyolstroms (B) wurde mittels eines Massendurchflussmessers 6 (Firma Bronkhorst, Mini Cori-Flow M1X, max. Durchfluss 8 kg/h) gemessen. Die Temperatur des 1,4-Butandiols betrug 40 °C.

In dem Statikmischer (7) (Sulzer SMX, Durchmesser 6 mm, Verhältnis von Länge zu Durchmesser L/D = 10) wurden der Polyisocyanatstrom (A) und der Polyolstrom (B) miteinander gemischt, so dass ein Mischungsstrom (C) erhalten wurde. Die Massenströme des Polyisocyanatstroms (A) und des Polyolstroms (B) wurden so eingestellt, dass das molare Verhältnis von Isocyanat- zu Hydroxy-Gruppen im Mischungsstrom (C) 0,78 betrug.

Mischungsstrom C wurde über eine Einmündung (23) in die Kreislaufleitung (24) geleitet, in dem ein Kreislaufstrom (D) in einem Kreislauf geführt wurde. Stromabwärts der Einmündung (23) wurde der Kreislaufstrom (D) in einen Statikmischer (8) (Statikmischer äquivalent zu Sulzer SMX, Innendurchmesser 34 mm, L/D=20) geführt. Die Temperatur des Prepolymerstromes (D) betrug 182 °C.

Stromabwärts des Statikmischers (8) wurde der Kreislaufstrom (D) in einen temperierbaren statischen Mischer (9) geführt. Dort fand die Oligomerisierung des Kreislaufstroms (D) mit Mischungsstrom (C) zum großen Teil statt und die entstehende Reaktionswärme wurde abgeführt. Der temperierbare statische Mischer (9) war ähnlich aufgebaut wie ein Sulzer SMR-Reaktor mit innenliegenden, gekreuzten Rohren. Er hatte ein Innenvolumen von 1,9 Litern und eine Wärmeaustauschfläche von 0,44 Quadratmeter. Er war mit Wärmeträgeröl beheizt/gekühlt. Die Heizmitteltemperatur am Eintritt betrug 180 °C.

Aus dem temperierbaren statischen Mischer (9) trat der Kreislaufstrom (D) mit einer Temperatur von 183 °C aus. Stromabwärts des temperierbaren statischen Mischers (9) wurde an einer Einmündung (11) ein Prepolymerstrom (E) aus dem Kreislaufstrom (D) abgeteilt und der Kreislaufstrom (D) weiter zu einer Zahnradpumpe (10) geführt. Der Prepolymerstrom (E) wurde in einen Extruder (16) geleitet.

Der Druck des Kreislaufstroms (D) wurde an einer Zahnradpumpe (10) erhöht. Die Zahnradpumpe (10) (Firma Witte Chem 25,6-3) hatte ein Volumen pro Umdrehung von 25,6 Kubikzentimeter und eine Drehzahl von 50 pro Minute. Der Kreislaufstrom (D) wurde stromabwärts der Pumpe an Einmündung (23) mit dem Mischungsstrom (C) vereinigt, wie bereits beschrieben.

Die Kreislaufleitung (24) bestand aus doppelwandig ausgeführten Rohrleitungen, die mit Thermoöl beheizt waren. Die Heizmitteltemperatur betrug 182 °C. Der Statikmischer (8), der temperierbare statischen Mischer (9) und die Zahnradpumpe (10) bestanden aus Apparaten, die mit Thermoöl beheizt waren. Die Heizmitteltemperatur betrug 182 °C.

Hinter dem Druckhalteventil (12) wurde der Strom (E) an einem Dreiwegeventil (13) vorbeigeführt. Dort wird es in einen Auffangbehälter (14), ein offenes 200-Liter-Metallfass mit Absaugung, gefahren.

Tabelle 1: Stoffströme bei der Herstellung des TPU in Beispiel 1

|  | [kg/h] |
| --- | --- |
| Strom A (HDI) | 2,909 |
| Strom B (BDO) | 2,001 |
|  |  |

(fortgesetzt)

|  | [kg/h] |
|---|---|
| Strom E (Prepolymer) | 120 |

Referenzbeispiel 2:

In einem Rührkessel (250 ml) wurden 60,16 g 1,4-Butandiol für 30 Minuten unter Rühren (170 Umdrehung pro Minute (U/min)) und Stickstoffeinleitung auf 90 °C geheizt. Anschließend wurde über einen Zeitraum von 45 Minuten 89,79 g 1,6-Hexamethylendiisocyanat kontinuierlich zu dem 1,4-Butandiol dosiert. Hierbei wurde die Temperatur des Reaktionsgemisches konstant um 4 °C pro Minute erhöht, bis eine Temperatur von 190 °C erreicht wurde (25 Minuten). Sobald eine Produkttemperatur von 190 °C erreicht wurde, wurde die Geschwindigkeit des Rührers auf 300 U/min erhöht. Die Temperatur im Rührkessel wurde konstant zwischen 190 °C und 200 °C gehalten.

Nach Ende der 1,6-Hexamethylendiisocyanat Dosierung wurde die Schmelze weitere 5 Minuten gerührt. Anschließend wurde sie im heißen Zustand in eine Aluminiumform gegossen.

Ergebnisse

Die Schmelzenthalpie und die Molekulargewichte der aus den Beispielen 1 und 2 erhaltenen thermoplastischen Polyurethane wurden nach den oben beschriebenen Verfahren untersucht. Die Ergebnisse sind in Tabelle 2 zusammengefasst:

Tabelle 2: Schmelzenthalpie und Molekulargewicht der erhaltenen Polyurethane

|  | **Erfindungsgemäß Beispiel 1** | **Vergleich Beispiel 2** |
|---|---|---|
| **Schmelzenthalpie $\Delta H_{fus}$ [J/g]** | 104,3 | 115,4 |
| **Schmelztemperatur [C°]** | 177,3 | 175,7 |
| $\overline{M}_n$ **[g/mol]** | 1305 | 1490 |
| $\overline{M}_w/\overline{M}_n$ | 7,94 | 2,55 |
| $\overline{M}_z/\overline{M}_w$ | 2,64 | 1,74 |
| $\overline{M}_w$ **[g/mol]** | 10360 | 3802 |

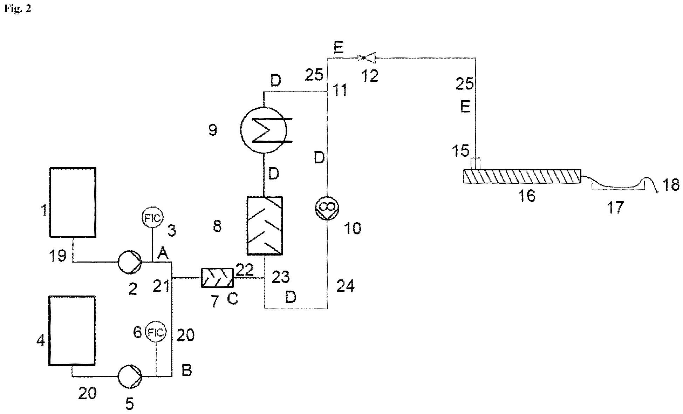

Die DSC Thermogramme der beiden untersuchten Materialien sind in Figur 2 dargestellt. Die thermoplastischen Polyurethanprepolymere aus den Beispielen 1 und 2 weisen jeweils ein zahlengemitteltes Molekulargewicht in einem ähnlichen Bereich von 1300 g/mol bis ca. 1500 g/mol auf und auch ähnliche Schmelztemperaturen im Bereich von 175 °C bis 178 °C. Allerdings weist das erfindungsgemäße TPU eine um 9,6 % geringere Schmelzenthalpie im Vergleich zum TPU des Vergleichsbeispiels auf. Aufgrund der niedrigeren Schmelzenthalpie des erfindungsgemäßen TPU muss bei der Weiterverarbeitung durch Aufschmelzen und nachfolgender Formgebung weniger Energie für das Aufschmelzen aufgebracht werden, als für die Weiterverarbeitung des TPU aus dem Vergleichsbeispiel. Wird für das Aufschmelzen der thermoplastischen Polyurethane aus den beiden Beispielen jeweils die gleiche Menge an Energie verwendet, so schmilzt das erfindungsgemäße TPU schneller.

**Bezugszeichenliste**

(A)     Polyisocyanatstrom
(B)     Polyolstrom
(C)     Mischungsstrom
(D)     Kreislaufstrom
(E)     Prepolymerstrom
(1)     Polyisocyanat-Vorratsbehälter
(2)     erste Fördereinrichtung
(3)     erster Massendurchflussmesser

(4) Polyol-Vorratsbehälter
(5) zweite Fördereinrichtung
(6) zweiter Massendurchflussmesser
(7) erste Mischungseinrichtung
(8) zweite Mischungseinrichtung
(9) temperierbare Mischungseinrichtung
(10) temperierbare Fördereinrichtung
(11) dritte Einmündung
(12) Druckregelventil
(13) Dreiwegeventil
(14) Auffangbehälter
(15) Entlüftungseinrichtung
(16) Extruder
(17) Kühlungseinrichtung
(18) Zerkleinerungseinrichtung
(19) Polyisocyanatleitung
(20) Polyolleitung
(21) zweite Einmündung
(22) Kreislaufzuführungsleitung
(23) dritte Einmündung
(24) Kreislaufleitung
(25) Prepolymerzuführungsleitung

**Patentansprüche**

1. Thermoplastisches aliphatisches Polyurethanprepolymer, **dadurch gekennzeichnet, dass** das Verhältnis $\overline{M}_z/\overline{M}_w$ des thermoplastischen aliphatischen Polyurethanprepolymers in einem Bereich von 2,3 bis 6 liegt und das Verhältnis $\overline{M}_w/\overline{M}_n$ des thermoplastischen aliphatischen Polyurethanprepolymers in einem Bereich von 4 bis 10 liegt, wobei $\overline{M}_z$ das Zentrifugenmittel der Molmasse, $\overline{M}_n$ das Zahlenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

2. Thermoplastisches aliphatisches Polyurethanprepolymer nach Anspruch 1, **dadurch gekennzeichnet, dass** das Verhältnis $\overline{M}_z/\overline{M}_w$ des thermoplastischen aliphatischen Polyurethanprepolymers in einem Bereich von 2,5 bis 5,5, vorzugsweise in einem Bereich von 2,5 bis 5 liegt.

3. Thermoplastisches aliphatisches Polyurethanprepolymer nach Anspruch 1 oder 2, **dadurch gekennzeichnet, dass** das thermoplastische aliphatische Polyurethanprepolymer ein massengemitteltes Molekulargewicht $\overline{M}_w$ in einem Bereich von 4000 g/mol bis 11000 g/mol, vorzugsweise in einem Bereich von 6000 g/mol bis 11000 g/mol, besonders bevorzugt in einem Bereich von 8000 g/mol bis 11000 g/mol aufweist, ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

4. Thermoplastisches aliphatisches Polyurethanprepolymer nach einem der Ansprüche 1 bis 3, **dadurch gekennzeichnet, dass** das thermoplastische aliphatische Polyurethanprepolymer eine Schmelzenthalpie $H_{fus}$ im Bereich von 60 J/g bis 110 J/g, vorzugsweise im Bereich von 70 J/g bis 110 J/g, besonders bevorzugt im Bereich von 80 J/g bis 110 J/g, noch bevorzugter im Bereich von 90 J/g bis 110 J/g, aufweist, ermittelt mit Dynamischer Differenzkalorimetrie (DSC) gemäß DIN EN ISO 11357-1:2017-02 mit einer Heizrate von 20 K/min im Bereich von 20 °C bis 250 °C.

5. Thermoplastisches aliphatisches Polyurethanprepolymer nach einem der Ansprüche 1 bis 4, **dadurch gekennzeichnet, dass** das Verhältnis $\overline{M}_w/\overline{M}_n$ des thermoplastischen aliphatischen Polyurethanprepolymers in einem Bereich von 5 bis 9, vorzugsweise in einem Bereich von 6 bis 8 liegt, wobei $\overline{M}_n$ das Zahlenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

6. Thermoplastisches aliphatisches Polyurethanprepolymer nach einem der Ansprüche 1 bis 5, **dadurch gekennzeichnet, dass** das thermoplastische aliphatische Polyurethanprepolymer ein Hydroxy-terminiertes thermoplastisches aliphatisches Polyurethanprepolymer ist.

7. Thermoplastisches aliphatisches Polyurethanprepolymer nach einem der Ansprüche 1 bis 6, **dadurch gekennzeichnet, dass** das thermoplastische aliphatische Polyurethanprepolymer durch Umsetzung von einem oder mehreren aliphatischen Polyisocyanatmonomeren mit einem oder mehreren aliphatischen Polyolmonomeren erhältlich ist und wobei der durchschnittliche Polymerisationsgrad n des thermoplastischen aliphatischen Polyurethanprepolymers in einem Bereich von 1,5 bis 19, bevorzugt im Bereich von 2 bis 9 und besonders bevorzugt im Bereich von 3,2 bis 6 liegt, wobei der durchschnittliche Polymerisationsgrad

$$n = \frac{x}{1-x}$$

ist und wobei $x$ das Verhältnis der NCO-Gruppen der eingesetzten Polyisocyanatmonomere zu den Hydroxy-Gruppen der eingesetzten Polyolmonomere ist.

8. Thermoplastisches aliphatisches Polyurethanprepolymer nach einem der Ansprüche 1 bis 7, **dadurch gekennzeichnet, dass** das thermoplastische aliphatische Polyurethanprepolymer durch Umsetzung von einem oder mehreren aliphatischen Polyisocyanaten mit einem Molekulargewicht im Bereich von $\geq$ 140 g/mol bis $\leq$ 400 g/mol, vorzugsweise von einem oder mehreren aliphatischen Diisocyanaten mit einem Molekulargewicht im Bereich von 140 g/mol bis 170 g/mol, mit einem oder mehreren aliphatischen Diolen mit einem Molekulargewicht im Bereich von 62 g/mol bis 210 g/mol, vorzugsweise einem oder mehreren aliphatischen Diolen mit einem Molekulargewicht im Bereich von 62 g/mol bis 120 g/mol erhältlich ist.

9. Thermoplastisches aliphatisches Polyurethanprepolymer nach einem der Ansprüche 1 bis 8, **dadurch gekennzeichnet, dass** das thermoplastische aliphatische Polyurethanprepolymer zu mindestens 96 Gew.-%, vorzugsweise zu mindestens 97 Gew.-%, besonders bevorzugt zu mindestens 98 Gew.-%, noch bevorzugter zu mindestens 99 Gew.-%, noch mehr bevorzugter zu mindestens 99,5 Gew.-% und am bevorzugtesten zu mindestens 99,9 Gew.-% aus dem Reaktionsprodukt der Umsetzung von 1,6-Hexamethylendiisocyanat mit 1,4-Butandiol besteht, bezogen auf die Gesamtmasse des thermoplastischen aliphatischen Polyurethanprepolymers.

10. Verfahren zur Herstellung eines thermoplastischen aliphatischen Polyurethanprepolymers gemäß einem der Ansprüche 1 bis 9 umfassend die folgenden Schritte:

    a) Mischen eines Polyisocyanatstroms (A) und eines Polyolstroms (B) in einer ersten Mischungseinrichtung (7), so dass ein Mischungsstrom (C) erhalten wird, wobei die Massenströme des Polyisocyanatstroms (A) und des Polyolstroms (B) so eingestellt werden, dass das molare Verhältnis von Isocyanat- zu Hydroxy-Gruppen im Mischungsstrom (C) in einem Bereich von 0,55 bis 0,85 oder in einem Bereich von 1,10 bis 1,55, vorzugsweise in einem Bereich von 0,55 bis 0,85 liegt,
    b) Einleiten des Mischungsstroms (C) in einen Kreislaufstrom (D), der in einem Kreislauf geführt wird, wobei die Monomere des Polyisocyanatstroms (A) und des Polyolstroms (B) im Kreislaufstrom (D) zu Prepolymeren, vorzugsweise Hydroxy-terminierten Prepolymeren, weiterreagieren,
    c) Abteilen eines Teilstroms vom Kreislaufstrom (D) als Prepolymerstrom (E) enthaltend das thermoplastische aliphatische Polyurethanprepolymer,
    d) optional Extrudieren des Prepolymerstroms (E).

11. Verfahren nach Anspruch 10, **dadurch gekennzeichnet, dass** der Polyisocyanatstrom (A) ein oder mehrere aliphatische Polyisocyanate mit einem Molekulargewicht im Bereich von $\geq$ 140 g/mol bis $\leq$ 400 g/mol, vorzugsweise ein oder mehrere aliphatische Diisocyanate mit einem Molekulargewicht im Bereich von 140 g/mol bis 170 g/mol und besonders bevorzugt 1,6-Hexamethylendiisocyanat enthält oder daraus besteht.

12. Verfahren nach Anspruch 10 oder 11, **dadurch gekennzeichnet, dass** der Polyolstrom (B) ein oder mehrere aliphatische Diole mit einem Molekulargewicht im Bereich von 62 g/mol bis 210 g/mol, vorzugsweise ein oder mehrere aliphatischen Diole mit einem Molekulargewicht im Bereich von 62 g/mol bis 120 g/mol und besonders bevorzugt 1,4-Butandiol enthält oder daraus besteht.

**13.** Verfahren nach einem der Ansprüche 10 bis 12, **dadurch gekennzeichnet, dass** das Verfahren die folgenden, zusätzlichen Schritte umfasst:

e) Abkühlen des Prepolymerstrom (E) aus Schritt c) oder des extrudierten Prepolymerstrom (E) aus Schritt d) unter den Schmelzpunkt des thermoplastischen aliphatischen Polyurethanprepolymers in einer Kühlungseinrichtung, und
f) Zerkleinerung des thermoplastischen aliphatischen Polyurethanprepolymers in einer Zerkleinerungseinrichtung.

**14.** Verfahren nach einem der Ansprüche 10 bis 13, **dadurch gekennzeichnet, dass** zumindest der Kreislaufstrom (D) unter einem Druck im Bereich zwischen 2 bar absolut und 11 bar absolut im Kreis geführt wird.

**15.** Zusammensetzung enthaltend mindestens thermoplastische aliphatische Polyurethanprepolymere nach einem der Ansprüche 1-9.

**16.** Verwendung von thermoplastischen aliphatischen Polyurethanprepolymeren nach einem der Ansprüche 1-9 oder einer Zusammensetzung nach Anspruch 15 zur Herstellung von thermoplastischem Polyurethan und / oder thermoplastischen Polyurethan-Dispersionen.

**17.** Vorrichtung zur Durchführung eines Verfahrens nach einem der Ansprüche 10 bis 14, umfassend:

einen Polyisocyanat-Vorratsbehälter (1) von dem eine Polyisocyanatleitung (19) zur Förderung eines Polyisocyanatstroms (A) abgeht, die in eine erste Mischungseinrichtung (7) mündet;
optional eine der Polyisocyanatleitung (19) zugeordnete erste Fördereinrichtung (2) zur Förderung des Polyisocyanatstroms (A);
optional einen an die Polyisocyanatleitung (19) angeschlossenen ersten Massendurchflussmesser (3);
einen Polyol-Vorratsbehälter (4) von dem eine Polyolleitung (20) zur Förderung eines Polyolstroms (B) abgeht, die in die erste Mischungseinrichtung (7) mündet, wobei die Polyolleitung (20) insbesondere stromaufwärts der ersten Mischungseinrichtung (7) mit der Polyisocyanatleitung (19) zusammengeführt wird;
optional eine der Polyolleitung (20) zugeordnete zweite Fördereinrichtung (5) zur Förderung des Polyolstroms (B);
optional einen an der Polyolleitung (20) angeschlossenen zweiten Massendurchflussmesser (6);
eine Kreislaufzuführungsleitung (22) zur Förderung eines aus der ersten Mischungseinrichtung (7) austretenden Mischungsstroms (C), die in eine Kreislaufleitung (24) zur Förderung des Kreislaufstroms (D) und chemischen Umsetzung der Komponenten des Kreislaufstroms (D) mit den Komponenten des Mischungsstroms (C) mündet;
wobei die Kreislaufleitung (24) vorzugsweise in Strömungsrichtung eine zweite Mischungseinrichtung (8), eine temperierbare Mischungseinrichtung (9) sowie eine temperierbare Fördereinrichtung (10) umfasst; und entweder
eine von der Kreislaufleitung (24) abgehende und in einen Auffangbehälter (14) mündende Prepolymerzuführungsleitung (25) zur Förderung eines Prepolymerstroms (E); oder
eine von der Kreislaufleitung (24) abgehende und einlassseitig in einen Extruder (16) mündende Prepolymerzuführungsleitung (25) zur Förderung eines Prepolymerstroms (E);
ein in der Prepolymerzuführungsleitung (25) vorgesehenes Druckregelventil (12) zur Regulierung des Drucks des Prepolymerstroms (E);
optional ein in der Prepolymerzuführungsleitung (25) angeordnetes und insbesondere stromabwärts des Druckregelventils (12) positioniertes Dreiwegeventil (13), von dem eine erste Prepolymerzuführungsleitung (25) abgeht die einlassseitig in den Extruder (16) mündet zur Förderung eines Prepolymerstroms (E) und von dem eine zweite in einen Auffangbehälter (14) mündende Prepolymerzuführungsleitung (25) abgeht, über die der Prepolymerstrom (E) insbesondere bei Inbetriebnahme, Außerbetriebnahme oder Störung der Vorrichtung ganz oder teilweise in den Auffangbehälter (14) geführt werden kann;
optional eine hinter dem Auslass des Extruders (16) angeordnete Kühlungseinrichtung (17), vorzugsweise ein Wasserbad, zur Abkühlung des thermoplastischen aliphatischen Polyurethanprepolymers unter seinen Schmelzpunkt; und
optional eine sich an die Kühlungseinrichtung (17) anschließende Zerkleinerungseinrichtung (18) zur Zerkleinerung des abgekühlten thermoplastischen aliphatischen Polyurethanprepolymers.

**18.** Vorrichtung nach Anspruch 17, **dadurch gekennzeichnet, dass** als erste Fördereinrichtung (2) und/oder als zweite Fördereinrichtung (5) unabhängig voneinander eine Zahnringpumpe und/oder als temperierbare Fördereinrichtung (10) eine Zahnradpumpe eingesetzt wird.

19. Vorrichtung nach Anspruch 17 oder 18, **dadurch gekennzeichnet, dass** als erste und/oder zweite Mischungseinrichtung (7, 8) und/oder als temperierbare Mischungseinrichtung (9) unabhängig voneinander ein Statikmischer eingesetzt wird.

20. Vorrichtung nach einem der Ansprüche 17 bis 19, **dadurch gekennzeichnet, dass** die Kreislaufleitung (24) aus doppelwandigen, mit einem Heizmittel beheizbaren Leitungen besteht, wobei bevorzugt auch die zweite Mischungseinrichtung (8), die temperierbare Mischungseinrichtung (9) sowie die temperierbare Fördereinrichtung (10) mit einem Heizmittel beheizbar sind, wobei das Heizmittel bevorzugt für eine Temperatur im Bereich von 160 °C bis 220 °C geeignet ist.

EP 3 838 950 A1

Fig. 1

20

Fig. 2

Fig. 3

**Fig. 4**

1. Aufheizung
20 K/min

Beispiel 1

177.3 °C,104.337 J/g

Te= 45.2 °C,Tg= 51.5 °C,cp= 0.162 J/(K*g)

Wärmestrom / W/g

4.000 J/(K*g)

Beispiel 2

175.7 °C,115.387 J/g

Te= 40.5 °C,Tg= 48.2 °C,cp= 0.254 J/(K*g)

-20.0   0.0   20.0   40.0   60.0   80.0   100.0   120.0   140.0   160.0   180.0   200.0   220.0

Temperatur / °C

**Europäisches Patentamt**
**European Patent Office**
**Office européen des brevets**

# EUROPÄISCHER RECHERCHENBERICHT

**Nummer der Anmeldung**

EP 19 21 6807

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 062 834 A (GILDING DENIS KEITH ET AL) 13. Dezember 1977 (1977-12-13) * Beispiele I-IV * * Spalte 1, Zeile 60 - Zeile 64 * ----- | 1-9,15, 16 | INV. C08G18/10 C08G18/32 C08G18/73 |
| A | EP 0 598 283 A1 (BAYER AG [DE]) 25. Mai 1994 (1994-05-25) * das ganze Dokument * ----- | 10-14, 17-20 | |

**RECHERCHIERTE SACHGEBIETE (IPC)**

C08G

Der vorliegende Recherchenbericht wurde für alle Patentansprüche erstellt

| Recherchenort | Abschlußdatum der Recherche | Prüfer |
|---|---|---|
| München | 6. Mai 2020 | Sütterlin, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 21 6807

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-05-2020

| Im Recherchenbericht angeführtes Patentdokument | Datum der Veröffentlichung | Mitglied(er) der Patentfamilie | Datum der Veröffentlichung |
|---|---|---|---|
| US 4062834 A | 13-12-1977 | AT 339048 B | 26-09-1977 |
| | | AU 6857274 A | 06-11-1975 |
| | | CA 1052940 A | 17-04-1979 |
| | | CS 199560 B2 | 31-07-1980 |
| | | DE 2423281 A1 | 05-12-1974 |
| | | DK 138395 B | 28-08-1978 |
| | | ES 426327 A1 | 01-09-1976 |
| | | FI 149974 A | 17-11-1974 |
| | | FR 2229727 A1 | 13-12-1974 |
| | | HU 177199 B | 28-08-1981 |
| | | IN 141398 B | 26-02-1977 |
| | | JP S574651 B2 | 27-01-1982 |
| | | JP S5016800 A | 21-02-1975 |
| | | NL 7406591 A | 19-11-1974 |
| | | NO 137504 B | 28-11-1977 |
| | | PH 11365 A | 08-11-1977 |
| | | PL 101226 B1 | 30-12-1978 |
| | | SE 415479 B | 06-10-1980 |
| | | US 4062834 A | 13-12-1977 |
| | | ZA 7403106 B | 31-12-1975 |
| EP 0598283 A1 | 25-05-1994 | EP 0598283 A1 | 25-05-1994 |
| | | JP H06206963 A | 26-07-1994 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1757632 B1
- DE 102011085944 A1
- WO 0114441 A
- EP 0519734 A
- DE 2901774 A

**In der Beschreibung aufgeführte Nicht-Patentliteratur**

- Polyurethane. **G. OERTEL.** Kunststoff Handbuch. Hanser Verlag, vol. 7, 99ff
- Methoden der organischen Chemie. **HOUBEN-WEYL.** Makromolekulare Stoffe. Georg Thieme Verlag, 1987, vol. E20, 1587-1593
- **JUSTUS LIEBIGS.** *Annalen der Chemie,* 1949, vol. 562, 75-136
- Polyurethane. **J.H. SAUNDERS ; K.C. FRISCH.** High Polymers. Verlag Interscience Publishers, 1962, vol. XVI
- **R. GÄCHTER ; U. H. MÜLLER.** Taschenbuch für Kunststoff-Additive. Hanser Verlag, 1990